(19) Europäisches Patentamt / European Patent Office / Office européen des brevets

(11) **EP 3 042 879 A1**

(12) **EUROPEAN PATENT APPLICATION**
published in accordance with Art. 153(4) EPC

(43) Date of publication:
**13.07.2016 Bulletin 2016/28**

(21) Application number: **14841824.7**

(22) Date of filing: **17.07.2014**

(51) Int Cl.:
*C02F 3/30* (2006.01)     *C02F 9/00* (2006.01)

(86) International application number:
**PCT/MX2014/000110**

(87) International publication number:
**WO 2015/034338 (12.03.2015 Gazette 2015/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.09.2013   MX 2013010211**

(71) Applicant: **Castellanos Roldán, Marco Antonio 68120 Oaxaca, OAX (MX)**

(72) Inventor: **Castellanos Roldán, Marco Antonio 68120 Oaxaca, OAX (MX)**

(74) Representative: **Awapatent AB**
**P.O. Box 45086**
**104 30 Stockholm (SE)**

(54) **SYSTEM AND MULTI-FUNCTIONAL METHOD FOR TREATING WASTEWATER**

(57)     The invention relates to a municipal wastewater treatment system (STAR) for forming a wastewater treatment plant (PTAR), characterized by the functional and structural relationship between the components thereof. The invention comprises seven treatment stages in the STAR and the arrangement thereof, including: an intake regulator box having a discharge outlet; a pretreatment stage consisting of solid separation screens and grit channels; and anaerobic biodigester; an up-flow anaerobic filter; drying beds; subsurface flow constructed wetlands; and a chlorine contact channel. The STAR and PTAR according to the invention are suitable for use in a single home, as well as for use by communities of approximately 5,000 (thousand) inhabitants, and their capacity can be increased to the extent that new elements are provided at each of the different steps, simply by adding and adapting modules, without having to replace the already operating elements.

## FIG. 3

EP 3 042 879 A1

Printed by Jouve, 75001 PARIS (FR)

Description

TECHNICAL FIELD

The invention relates to a municipal wastewater treatment system (STAR) for forming a wastewater treatment plant (PTAR), characterized by the functional and structural relationship between the components thereof.

BACKGROUND OF THE INVENTION

Wastewater is defined as water having a varied composition and coming from municipal, industrial, commercial, agricultural, livestock, and domestic discharges, and the like, and mixtures thereof, including rainwater. The cleaning treatment for the wastewater consists in a series of physical, chemical and biological processes aimed to remove the physical, chemical and biological contaminants present in the human-use effluent water. Wastewater can be treated within the location wherein it is generated (for example by septic tanks or other depuration means) or it may be collected and carried by a system having pumps and piping to a municipal treatment plant. Although the wastewater treatment processes may take several hours, they generally involve a great consumption of energy due to the pumping equipment, and because they require personnel qualified in some extent for the operation and maintenance thereof.

Efforts to collect and to treat household swage are typically subjected to local, state and federal regulations and standards; in Mexico they make reference to the Mexican Official Standard NOM-001-SEMARNAT-1996, wherein the maximum limits for contaminants in wastewater discharges in national waters and property are established; certain physical, chemical and biological parameters are established as well as their maximum allowed levels in wastewater discharges, as determined by the Water National Commission in order to preserve and to control the water quality according to the National Waters Law and Rules.

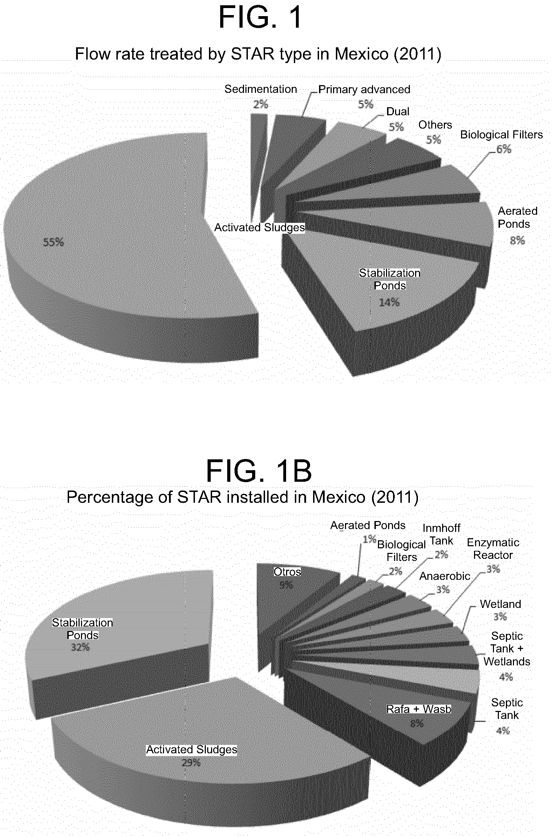

According to the National Inventory of Municipal Plants in Operation 2012 of the Water National Commission (CONAGUA), at the end of 2011, 2,269 water treatment plants were recorded in operation, with an installed capacity of 137,082 l/sec; of these plants, the "activated sludge" and "stabilization ponds" technologies represent the most of the flow treated in the national market, and installed plants, respectively (CONAGUA), (Figures 1A and 1 B).

Generally, water treatment starts by a primary treatment related to the solid settling, here, an initial physical separation is made from the coarse solids (garbage) present in the domestic and industrial sewage flow by using a grit system, although these materials may also be grinded by special equipment; then the flow is passed through a desander (separator for very small, very dense solids such as sand), followed by a primary sedimentation to separate the suspended solids present in the wastewater. In order to remove dissolved metals (mainly plumb and phosphorous) precipitation reactions are used. A secondary treatment follows, consisting in the biological treatment of organic matter present in the wastewater by a transformation into suspended solids which are rapidly removed; the progressive conversion of the dissolved biological matter into a solid biological matter occurs by the action of bacteria. Once the biological mass is separated or removed (process referred to as secondary sedimentation), the treated water may be subjected to a tertiary treatment, additional processes which may involve disinfection, filtration, micro-filtration, etc. The final effluent may be discharged or recycled back to a natural water body or to a surface land, to the subsurface, etc. The intrinsic differences between each method results in differences in the system efficiency, either from the point of view of easiness of operation or of the final quality of the water treated.

Secondary treatments may be based on the activated sludge technology with some variation in their mechanisms, for example, filtering sludge or slurry, filtering beds or oxidation beds, wherein biological oxidative films are formed in the bed material (charcoal, limestone, plastics, etc.), slow-movement rotatable and spiral systems being water-submerged, and also biotic films occur, filter or bed biological reactors, biological filters, just to mention some of them. Activated sludge is a biological process used for natural depuration (bioremediation) of wastewater consisting of mixing and aerating the wastewater and biological sludge (microorganisms) in a tank referred to as reactor; first, an aerobic treatment occurs of the wastewater, due to the presence of an aerobic culture of suspended microorganisms which oxide the organic matter, and then other biodegradation or oxidation processes occur of the dissolved organic matter, and of biosynthesis or production of new cellular biomass, the purpose is to produce a clarified or water without organic-suspended matter and low in Biochemical Oxygen Demand (BOD), and in Total Suspended Solids (TSS), which is suspended organic matter. The activated sludge technology implies the use of pumps between the aeration and sedimentation tanks, besides to air compression equipment to provide dissolved oxygen and to promote the growing of biological organisms which substantially remove organic matter, and a sludge returning system in order to maintain a high concentration of microorganisms in the aeration tank. In fact, the active sludge plants known in the prior art have a variety of possible modifications. The effluent may be subjected to another treatment (tertiary) before its use (Winkler, M.A., 1998. Ramalho R.S. 2003).

Other example of secondary treatment is the pond, this is also a bioremediation method based on microbial activity. They are reservoirs construed by land excavation and compacting, which store water of any quality for a determined period of time. They constitute an alternate treatment since they allow a simple handling of the wastewater, nutrients recycling and the primary food production in the feed-chain. Stabilization ponds are substantially artificial reservoirs, comprising one or more pond-series, which are classified mainly depending on the type of predominant biological reaction, which may be: anaerobic, aerobic, facultative or oxidative. The first treatment is carried out in an anaerobic pond, which is mainly designed to remove TSS and a portion of the soluble fraction of organic matter thus reducing the BOD. In the following treatment in the facultative pond, most of the remaining fraction of the suspended organic matter is removed by means of the coordinated activity of algae and heterotrophic bacteria; the last stage of a series of pond system is carried out in maturation ponds, wherein the removal of pathogens and nutrients occur (mainly nitrogen). Stabilization ponds are particularly useful for tropical and sub-tropical countries, since the sunshine intensity and environment temperature are key factors for the efficiency of degradation processes, however, these are the most costly wastewater treatment technology due to the investment in large land extensions, which may be limitative if there is not available land. (Romero Rojas J.A. 2005; Sasse, L. 1998; Seabloom and Hanson, 2004).

Other treatment system comprises up-flow anaerobic filters (UAF), these are reactors having a filled bed and used to reduce the dissolved organic matter with the aid of anaerobic microorganisms being adhered on the surface of the filling material. The UAF are an occasional component of the treatment plants. The wastewater is feed to the filter through a porous body, contacting it with a fine film of microorganisms adhered to the surface, or flocculated, wherein the anaerobic degradation process is carried out. Anaerobic filters generally operate with a reasonable removal efficiency of the contaminant load (this is noted as mass units per time unit given at a wastewater discharge), in the range of 25 to 38°C. The main issue with the UAF systems is the frequent clogging due to the channel designs and the diameter of the stone strata used; this makes the operation difficult and costly. (Gallego D., Montoya, J. and Valverde J. 2007; Malina, J., and Pohland, F. 1992).

The number of patents found fulfilling the requirements for municipal wastewater is very low, the first appeared in 2001 and up to date the patents related to the subject matter are not many. By far, China is the country which is most working in the development of treatment systems without using electric energy and using biological and physical treatments, for example, the application PCT/CN2010/073031 is related to a treatment system combining a collector, an adjusting zone, a filter, a multi-stage aerobic/anaerobic tank, a bioreactor, a catalytic oxidation zone, and an activated carbon filtering zone, wherein the effluent fulfills with the national regulation. Among other examples, reference is made to US Patent No. 5,951,866 related to the use of a bioreactor of the wetland-type involving the use of subsurface piping to avoid water freezing, and thus is designed for cold or Nordic climate; and US Patent No. 6,517,723 is related to a bioreactor combing anoxic and aerobic treatments in an activated sludge system, and having immersed membrane filters to pass from one system to the other.

MX Patent 265382 "Anaerobic Process for the Treatment of Wastewater using Artificial Wetlands", belongs to the closest prior art to the invention, in fact, the invention derives from the method claimed in said patent consisting of 5 stages: 1) pretreatment which may have a pumping sump, 2) anaerobic digesters, 3) up-flow anaerobic filters, 4) multi-flow subsurface artificial wetlands having a length-width ratio of 1:2, 5) dehydrating systems for sludge coming from the anaerobic digesters. The efficiency achieved is up to 85%. The system may be modulated in terms of the wastewater thereby determining the number of elements to be used. The biodigester structure is described, construed from armed concrete having 0.20 m width, in both the walls and the sedimentation slab, is sectioned inside in three hoppers in order to uptake the whole sludge as a product of the organic matter mineralization, which may be removed by the hydraulic load effect, as six vent valves are installed laterally to the biodigester; it is also sectioned in two big reservoirs in order to select the water already processed, but taking care for the water movement to be uniform. Due to the production of gases such as methane and carbon dioxide, outlets are installed at the top part of the slab to direct them to a chamber containing a zeolite strata at the top, in order to mitigate the odor. Further, water is circulated through the up-flow anaerobic filter (UAF). This element has two flow-distribution boxes for a better control and natural cleaning, the water channeling is made by the copper piping of 3" diameter, with the purpose of achieving a longer life against the ultraviolet rays. Water is deposited at the bottom part of the UAF and it will tend to ascend by pressure differences, the proper location of the three aluminum channels will collect the water at the top part, passing through an inert medium of rounded river stone or volcanic rock (tezontle) having a diameter greater than 5", wherein a biomass is produced which removes the organic matter. This process helps the mineralization, these elements are deposited at the bottom part and after they may be removed by means of two UAF part valves. The object of this element is to reach a reduction in both the BOD and TSS in an additional 45% to that obtained with the biodigester, to which a hydraulic residence time of 24 hours will be available. The effluent obtained from the UAF is then distributed in subsurface-flow artificial wetlands, thus achieving a purification efficiency of 85%. The wastewater treatment system (STAR) object of the present invention, although it is based on the process disclosed in the MX Patent 265382 it includes a series of essential modifications for an efficient development of the wastewater treatment plant (PTAR), these modifications are the result of the experimental work developed with the first project, such that in this invention all those elements conforming a STAR and PTAR are provided but more efficient. In the detailed description all critic changes are identified which determine a better efficiency of the system.

The wastewater treatment system (STAR) of the invention has been analyzed in a treatment plant (PTAR) in more specific conditions detailed below, and it fulfills the Mexican regulations, specifically the standard NOM-001-SEMARNAT-1996, which states the maximum allowable values for contaminants in wastewater discharges in national waters and property, thereby obtaining a quality-water possible to be used. Importantly, there is no other equivalent standard, the internal dispositions existing in other countries do not have the elements and technical and legal precepts that are otherwise integrated and complemented coherently in the Mexican Official Regulations, based on the technical and scientific baselines internationally recognized.

The STAR and PTAR of the invention provide the necessary elements improving their operation and efficiency under conditions of extreme volume, that is, in both situations where the water flow is very variable and the volume very high because of the pluvial precipitation, and in situations where due to the location geography, the water volume is scarce thus having a greater amount of solid accumulation in the water.

The STAR and PTAR of the invention are suitable to service communities having less than 2,500 inhabitants, only in Mexico there are more than 188 thousand communities representing 98% of the total of communities in the country, and represent at least a quarter of the total population, 23%. It is worth mentioning that NOM-01-SEMARTNAT-1996 states that this kind of communities are not forced to install a treatment plant, but they still continue affecting the environment, they are about 26'220,000 inhabitants discharging swages without treatment to the rivers. The pollution problem becomes more severe if the discharges of medium-sized cities is added, with a population of 35 thousand inhabitants. The STAR and PTAR of the invention are an excellent option to solve this problem without negative effects, such as the pollution due to other chemical compounds, high energy consumption, or to depend on complex technologies requiring specialized personnel for their operation and maintenance. Most small communities are located far from the cities and do not have economic resources allowing them to operate the existing infrastructure, thereby now being urgent to provide a wastewater treatment system, being low-cost regarding the energy consumption, which does not use chemical products, and whose operation be possible without specialized personnel.

Below, a detailed description of the stages comprising the treatment system, the parts thereof, and the fixtures to be included, is provided.

BRIEF DESCRIPTION OF THE DRAWINGS

Fig. 1.A: Fluid flow treated by type of STAR in Mexico. (National Inventory of Municipal Plants for Wastewater Purification Treatment in Operation, December 2011, CONAGUA).

Fig. 1.B: Percentage of STAR installed in Mexico. (National Inventory of Municipal Plants for Wastewater Purification Treatment in Operation, December 2011, CONAGUA).

Fig. 2: Flow chart of the system showing 7 stages. BOD (Biochemical Oxygen Demand), TSS (Total Suspended Solids).

Fig. 3: Hydraulic profile of the STAR of the invention, main equipment of the 7 stages of treatment and their disposition are shown, including: an intake regulator box having a discharge outlet (1), a pretreatment (primary treatment) consisting of solid separation screens and grit channels (2); an anaerobic biodigester (3), an up-flow anaerobic filter (UAF) (5); drying beds (4), subsurface flow constructed wetlands (6); and a chlorine contact channel (tertiary treatment) (7).

Fig. 4.A: Plant view of the intake regulator box. Showing are: the box (8), the box size may vary depending on the swage piping size, the inlet pipe (9), the outlet or over-flow pipe (10), guide frame (11), manual-operated outlet regulating gate (12), regulator box discharge pipe (13) interconnected to the pretreatment.

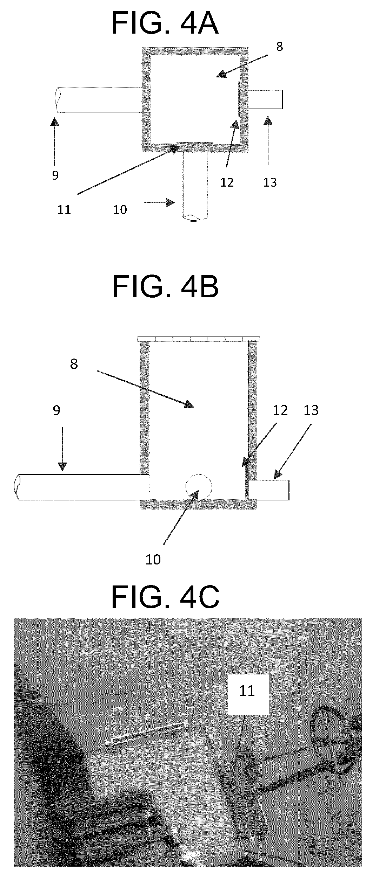

Fig. 4.B: Sectional diagram of the regulator box. Showing are: the box (8), the box size may vary depending on the swage piping size, the inlet pipe (9), the outlet or over-flow pipe (10), manually operated outlet regulating gate (12), discharge pipe of the regulator box (13) interconnected to the pretreatment.

Fig. 4C: Gate aspect. Shown is: a guide frame (11).

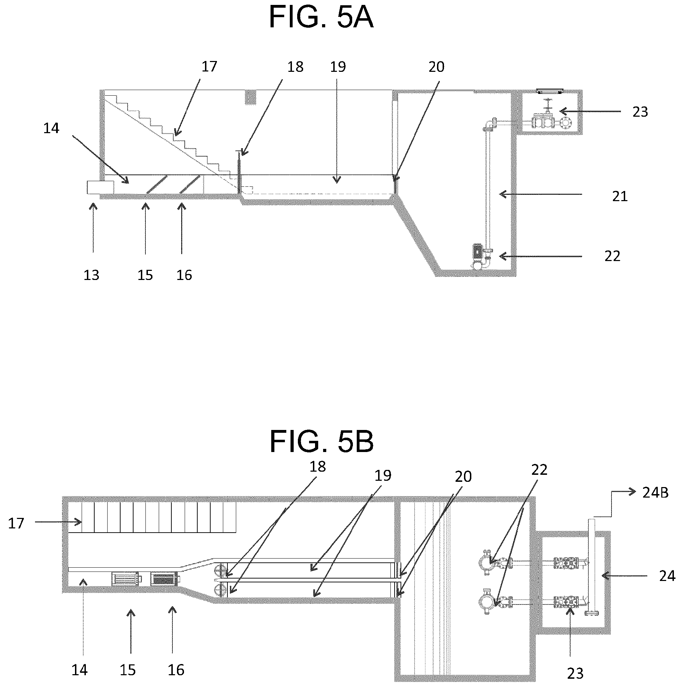

Fig. 5.A: Sectional diagram of the pretreatment system having a pumping system. Showing are: inlet piping coming from the regulator box (13), an inlet channel (14) having two meshes, one thick mesh (15), a thin screen mesh (16), maintenance stairs (17), a manually operated gate (one for each desander) (18), desander channels (19), sutro or proportional weir (20), pumping sump and suction piping for pumping equipment (21), pump system (22), check valves and non-rising stem valves (23).

Fig. 5.B: Plant view of the pretreatment system having a pumping system; including two desanders. Showing are: an inlet channel (14) having two meshes, one thick mesh (15), a thin screen mesh (16), maintenance stairs (17), a manually operated gate (one for each desander) (18), desander channels (19), sutro or proportional weir (20), pumping system (22), check valves and non-rising stem valves (23), outlet towards the regulator box at the biodigester upper part (24), continuous connection to a rate regulator box (24b).

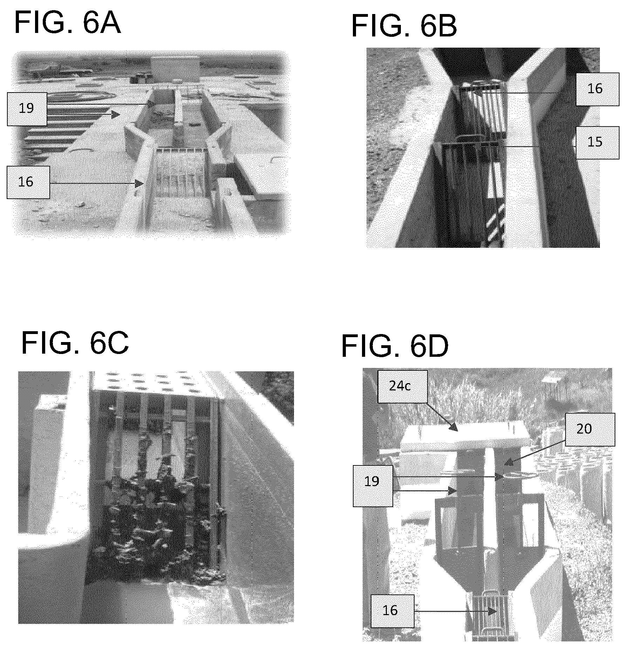

Fig. 6.A: Pretreatment system aspect without a pumping system during construction. Showing are: thin screen mesh (16), desander channels (19).

Fig. 6.B: Pretreatment system aspect without a pumping system showing the mesh order. Showing are: thick screen mesh (15) and thin screen mesh (16).

Fig. 6.C: Aspect of the pretreatment system without a pumping system showing the thick screen mesh in operation.

Fig. 6.D: Aspect of two desander boxes. Showing are: thin screen meshes (16), desander channels (19), sutro or proportional weir (20), intake box (24c).

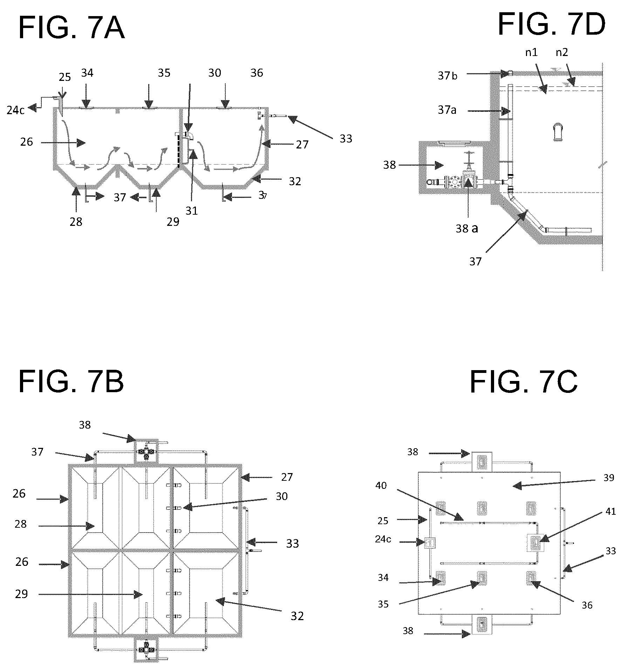

Fig. 7.A: Anaerobic digester diagram: sectional of each of both compartments required in the biodigester, Showing are: intake box (24c) when there is not a pumping system, inlet pipe (25), subdivision forming 2 compartments (26,27), and the first in turn has two hopper zones (28, 29) connected by a series of communication pipes (30) at 1.50 m height (31) with the next secondary compartment (27), having a hopper zone (32), a discharge pipe (33) and sludge discharge pipe (37), above each hopper zone there is a hopper maintenance lid (34, 35, 36).

Fig. 7.B: Anaerobic digester diagram: Plant with the two treatment trains: Showing are: subdivision forming 2 compartments (26,27), and the first in turn has two hopper zones (28, 29) connected by a series of communication pipes (30), a hopper zone (32), an discharge pipe (33) and sludge discharge pipe (37), valve box to remove solids from each hopper (38).

Fig. 7.C: Plant view of the digester upper slab (36) having six hopper maintenance lids (34, 35, 36), intake box (24c) when there is not a pumping system, inlet pipe (25), discharge pipe (33), valve box to remove solids from each hopper (38), piping system to collect biogas in each compartment (40), and biogas concentration boxes wherein it is filtered through a zeolite layer (41).

Fig. 7.D: Design for sludge outlet, Showing are: sludge discharge pipe (37), having a vent for air suctioning (37a), having a maintenance cap (37b), having a connection to a valve box for the removal of these solids from each hopper (38), gate valve (38a), maximum water level (n1), water over-level (n2).

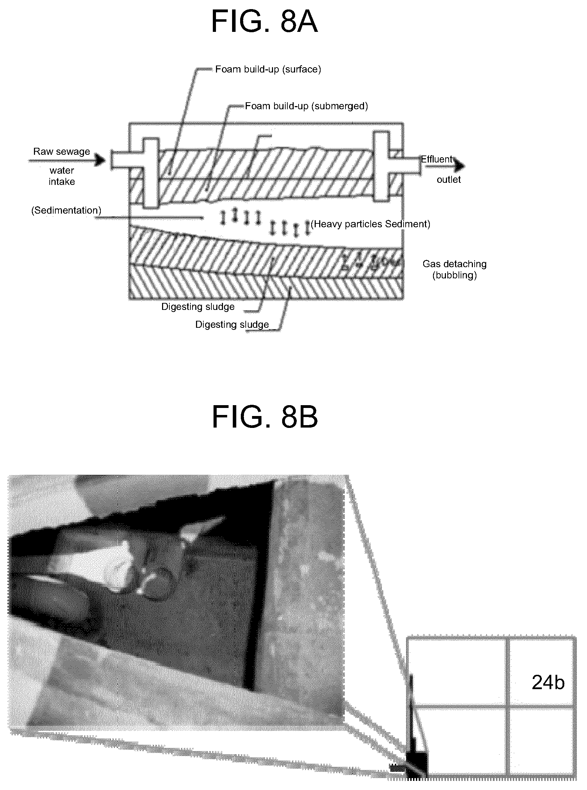

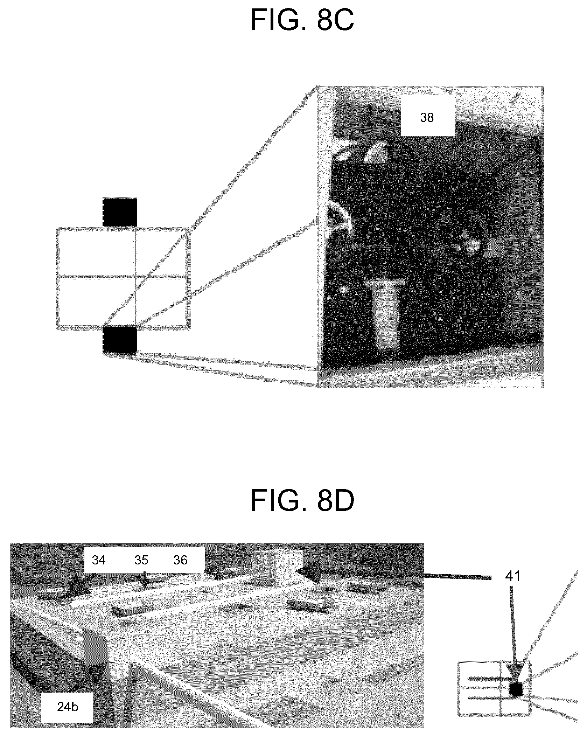

Fig. 8.A: Diagram showing the operation and design of a conventional biodigester (Reynolds and Richards, 1996).

Fig. 8.B: Aspect of the rate regulator box (24b) and its location with respect to the biodigesters.

Fig. 8.C: Aspect and location of the valve box (38) for sludge purge from biodigesters and disposition of the three non-rising stem valves.

Fig. 8.D: Aspect of the biodigester slabs. Showing are the biogas intake boxes (41), the lids (34), (35, (36) and the rate regulator box (24b).

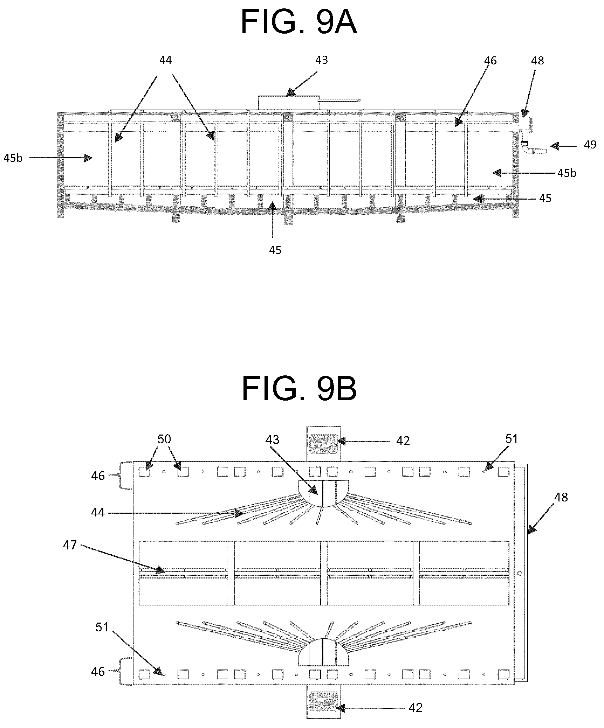

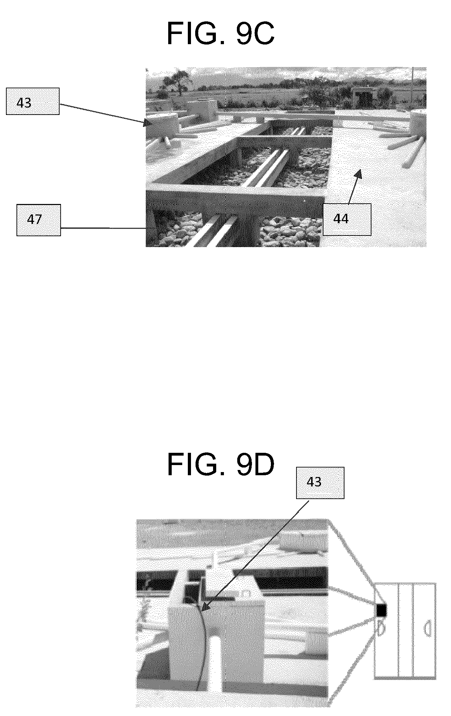

Fig. 9.A: Sectional diagram of the filtering system (UAF), Showing are: Semicircular box for water distribution in the process and from the biodigesters (43), PVC piping series, lined with mortar cement-sand and armed with chicken mesh (44) vertically continued until connecting with a mimic bottom wherein they are discharged (45), area wherein the petrous filtrating material is located (45b), part collecting channels areas (46), concentrating and collecting channel abutted at the front (48), front channel outlet for treated water (49).

Fig. 9.B: Plant view of the filtering system (UAF), Showing are: Valve boxes for sludge purge (42), Semicircular box for water distribution in process and from the biodigesters (43), PVC piping series, lined-up with mortar cement-sand and armed with chicken mesh (44) vertically continued until connecting with a mimic bottom wherein are discharged (45), area wherein the petrous filtrating material is located (45b), areas of part collecting channels (46), central collecting channel (47), concentrating channel and abutted at the front (48), maintenance and verification lids at the part channels (50), biogas venting and purge to avoid slab damage at the UAF (51).

Fig. 9C: Aspect of the central collecting cannel (47) for the UAF effluent, the two circular boxes (43) are seen in a symmetrical disposition and the piping series (44).

Fig. 9.D: Aspect of the inlet boxes (43).

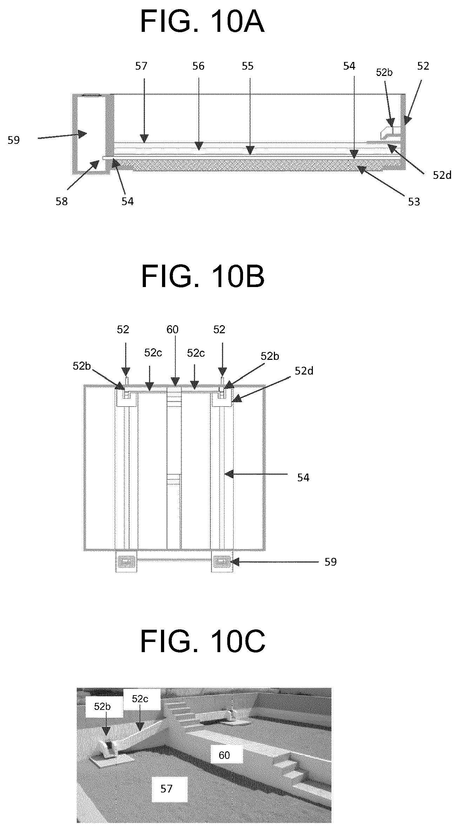

Fig. 10.A: Sectional diagram of the drying beds. Showing are: sludge inlet pipe (52) from the UAF and biodigester, gate (52b), dissipating slab (52d), clay and lime mixture bottom in order to avoid leakages to the subsurface (53), perforated pipe to collect the lixiviates (54), coarse gravel layer (55), medium gravel layer (56), sand layer (57), collecting pipe outlet (58), sump to concentrate the lixiviates (59).

Fig. 10.B: Plant view of two adjacent drying beds, one for the biodigester and the other for the UAF. Showing are: sludge inlet pipe (52) from the UAF and biodigester, gate (52b), distribution channel (52c), dissipating slab (52d), perforated pipe to collect the lixiviates (54), sump for the concentration of lixiviates (59), wall-hallway with stairs dividing the two drying beds due to the level difference (60).

Fig. 10.C: Outer aspect of the drying beds, Showing are: sludge inlet pipe from the biodigester, gate (52b) distribution channel (52c), clay and lime mixture bottom in order to avoid leakages to the subsurface (53), and access hallway (60).

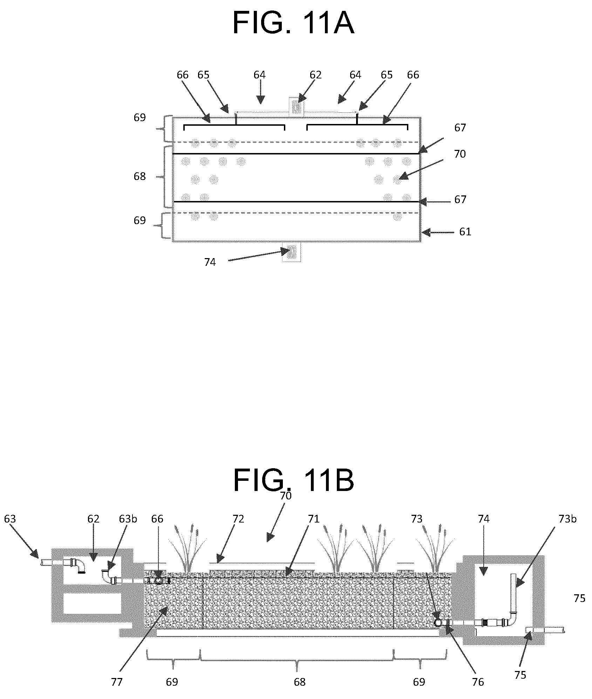

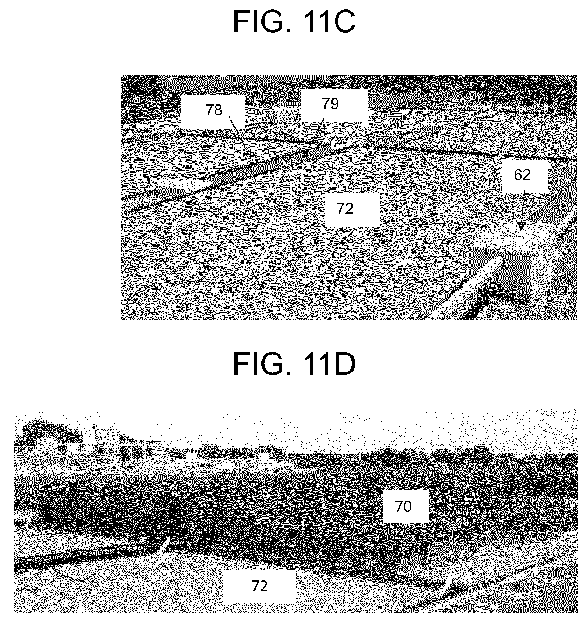

Fig. 11.A: Plant view of the constructed wetlands. Showing are: concrete wall perimeter (61), concentration/distribution box from UAF (62), inlet pipe to the bidirectional wetland with the purpose of achieving an even flow of the water under treatment (64), connecting pipe (65), and each-part bidirectional pipe (66), these three pipes 64, 65 and 66 distribute the flow and allows it to be homogeneous and of the piston type, in turn, pipe 66 has outlets lengthwise every 1.50 m. An independent air-injector pipe is included to increase oxygen level when the organic loads are high, having solar-powered equipment (67), coarse gravel area of 4 to 5" (69), medium gravel area of 2 to 3" (68), tule-type plants (70), collecting box (74).

Fig. 11.B: Sectional view of the constructed wetlands. Showing are: concentration/distribution box from UAF (62), inlet pipe (63) and inlet wetland pipe (63b) bidirectional pipe (66), coarse gravel area from 4 to 5" (69), medium gravel area from 2 to 3" (68), tule-type plants (70), water level (71), 10 cm gravel layer of 1" to avoid water heating in the wetland and to avoid bad odors (72), perforated effluent-collecting pipe (74) and it determines the water level in the wetlands, at the bottom and before the elbow, PVC special pieces are installed allowing a rotational movement of the pipe (73b) and thereby promoting the plant rhizome (70), collecting box (74), treated water collecting pipe, used as outlet to the chlorine contact box (75), at the same collecting pipe (73) another pipe is to be connected (76) to inject pressurized air in order to remove the sludge building causing the fluid not to flow properly, petrous material (77).

Fig. 11.C: Aspect of the geo-membrane projecting from the wetland perimeter (78) and it held at the edge with an aluminum strip (79), concentration/distribution box from UAF (62), 1" gravel layer (72).

Fig. 11.D: Aspect of the wetlands with tule-type plants (70) and even without plants showing the gravel layer (72).

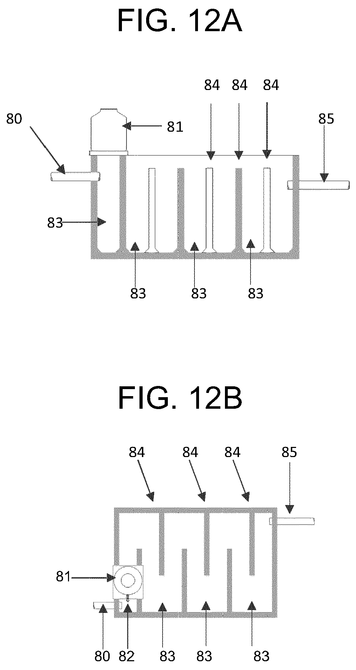

Fig. 12.A: Sectional view of the chlorine contact box. Showing are: influx pipe from the wetlands (80), calcium hypochlorite solution storing tank (81), wall-delimiting segments (83) in zigzag communication (84), discharge pipe (85).

Fig. 12.B: Plant view of the chlorine contact box. Showing are: influx pipe from the wetlands (80), calcium hypochlorite solution storing tank (81), chlorine inlet pipe (82), wall-delimiting segments (83) in zigzag communication (84), discharge pipe (85).

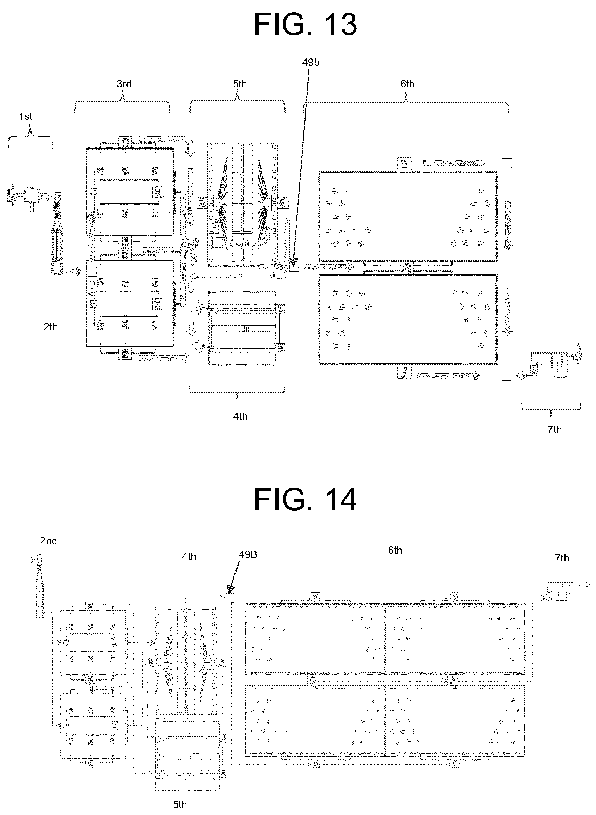

Fig. 13: Spatial distribution scheme of the seven stages, it shows the parallel distribution of the two subsurface flow constructed wetlands, it includes two biodigesting systems. The location of the concentrating box is indicated (49b) receiving the effluent from the UFA.

Fig. 14: Spatial distribution scheme of the seven stages, showing the parallel distribution of 4 subsurface flow constructed wetlands, it includes 2 biodigesting systems. The location of the concentrating box is indicated (49b) receiving the effluent from the UFA.

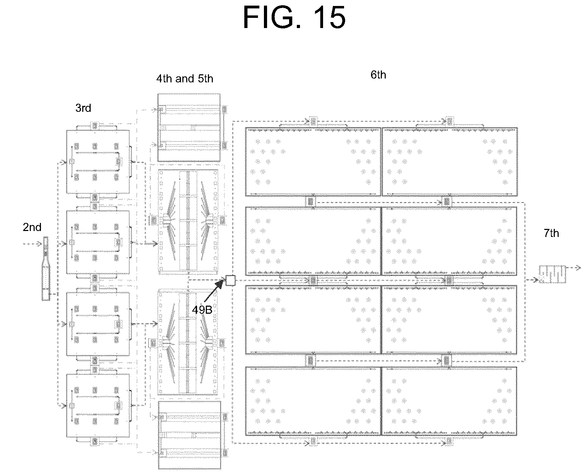

Fig. 15: Spatial distribution scheme of the seven stages, showing the parallel distribution of 8 subsurface flow constructed wetlands, it includes 4 biodigesting systems. The location of the concentrating box is indicated (49b) receiving the effluent from the UFA.

## DETAILED DESCRIPTION OF THE INVENTION

Wastewater is related to the resulting use of domestic and industrial water. It is also referred to as served water or sewage water. It is called residual or waste water since after being used constitute a residue, something not useful for the direct user; and are generally black in color. Some authors differentiate between served waters and waste waters, in the sense that the first would come only from domestic use and the second would come from the mix of domestic and industrial water. In all cases, it is constituted of all the water carried by the sewage system, and includes, sometimes, rainwater, and soil water-infiltrations. In order to quantify the pollution level and to establish the most suitable treatment system of the wastewater, several parameters are used stated in the Mexican Official Regulation in force.

The present invention is a set of procedures and equipment for treating wastewater, it is based on treatments already known in the state of the art but including a set of modifications made in both the step order and in the equipment itself, the arrangement or the order of several of its parts is essential to obtain the expected performance, and are the result of the evaluation of several modifications carried out during the experimental stage; as a whole result in a more efficient Wastewater treatment system (STAR), which guides the construction of a more efficient wastewater treatment plant (PTAR). The quality of the water treated with the STAR and PTAR of the invention fulfills the Mexican Official Standard NOM-001-SEMARNAT-1996 for the discharging of wastewater in national waters and property.

The STAR and PTAR of the invention are designed to serve from one single house to communities having up to 30 thousand inhabitants or more where there is an available area to install the PTAR, and it has the possibility of increasing its capacity as new elements be incorporated in each one of the different steps, without the need of substituting the operating elements by simply adding and adapting modules. This description provides that the necessary elements improving the operation and efficiency of the STAR and PTAR in extreme volume conditions, that is, in both situations where the water flow rate is very variable and where the volume could be very high by the rainwater, and situations where due to the location geography the volume is scarce with the resulting increase of solids in the water. It is also a very adaptable system in a flexible manner to the wastewater load variations, which in addition, do not follow a determined pattern, as well as to the location geography variations and of the soil. The STAR of the invention adapts itself without losing its efficiency in the depuration system.

The debris or organic contaminants are the set of organic residues produced by human beings, livestock, etc. and include feces and other materials being decomposed by aerobic bacteria, i.e., in oxygen consuming processes.

When this kind of debris are excessive, bacteria proliferation depletes oxygen, and in this water fish and other beings in need of oxygen cannot longer live in this water. The rates to measure the pollution by organic debris are the amount of dissolved oxygen (DO) in water, or the biological oxygen demand (BOD). The parameters or variables used as a reference to determine the quality of the water, for the evaluation of the STAR of the invention were: Total suspended solids (TSS) and the biological oxygen demand (BOD).

The mostly used parameter is BOD, which is defined as the dissolved oxygen concentration consumed by the microorganisms present in the water or added therein to carry out the oxidation measurement of the whole organic matter present in the water sample. Generally, in domestic water this value ranges from 200 to 300 mg/l and it may be of 500 mg/l. DBO value should be lower than 8 mg/l in order for the water to be regarded as drinkable, however, for the typical wastewater treatment plants, it is enough to obtain a BOD lower than 100 mg/l, according to the official standards, the water so treated could be discharged to a natural affluent without being such a contamination source to that affluent that damages the environment. The PTAR of the invention guarantees the obtainment of a BOD of 75 mg/l, and by modifying various parameters thereof, BOD levels could be achieved lower than 30 mg/l. A decrease of BOD to a 15 mg/l level has been achieved; with this values the discharge of the water treated with the PTAR of the invention might be done even to rivers or water bodies ranked C, i.e., having aquatic life, according to the standard NOM-001-SEMARNAT-1996.

Total suspended solids (TSS) of a natural or residual water sample, industrial or domestic, is defined as the portion of restrained solids by a fiber-glass filter, which afterwards is dried to 103-105°C up to a constant weight; the weight increase of the filter represents the total of suspended solids. If the suspended material clogs the filter and extends the filtration, the difference between the total solids and the dissolved solids may give an estimate of the total suspended solids. This method applies to drinkable, surface and salt water, house and industrial wastewater and acid rain, in a range from 4 to 20,000 mg/l.

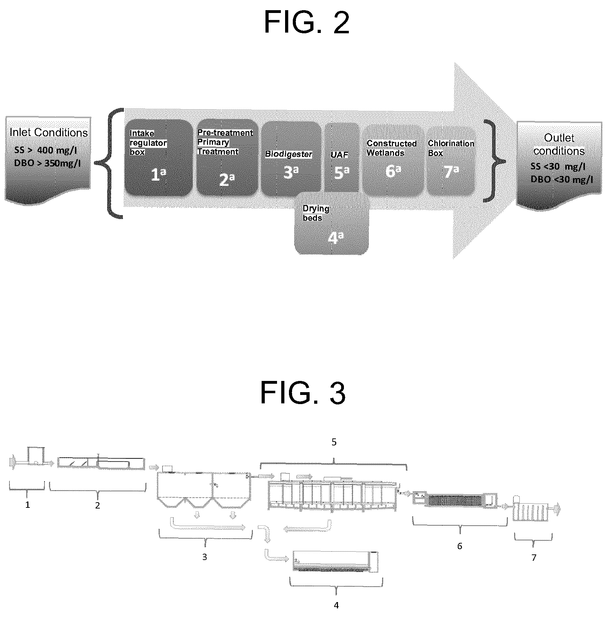

The STAR of the invention basically comprises a seven essential stage-train, which elements are connected in series, shown in Figures 2 and 3. The inlet conditions of the wastewater are: TSS > 400 mg/l, possibly being 500 mg/l; and a BOD > 350 mg/l. The outlet conditions from the PTAR of the invention are: SST<70 mg/l, possibly being 15 mg/l; and a BOD < 100 mg/l possibly being in the range from 30 to 15 mg/l, so the difference could be of 95 to 100%. In a sloped soil topography where the STAR is to be located, the 7 stage-train works without the need of a pumping sump between stages 2 and 3. If the topography is plain, the pumping sump is only required between stages 2 and 3 since the rest are facilities located above the topographical level, and slopes are formed among stages 3 to 7 such than no pumping is required. Figure 3 illustrates the arrangement of the 7 elements or stages wherein between stages 2 and 3 there is a slope enough for its operation without pumping.

The scheme of the STAR treatment stages is shown in Figure 3, it starts with an intake regulator box having a discharge outlet (1), a pretreatment (primary treatment) consisting of solid separation screens and grit channels (2); followed by a series of three different biological treatments (secondary treatments), first by hoppered septic tanks wherein biosolids accumulate and biodegrade by anaerobic biological means (biodigester) (3), then the effluent water passes to an up-flow anaerobic filter (UAF) wherein the contaminant biological degradation continues (5); after the wastewater passes through a submerged constructed wetland system known as Vegetated Submerged Bed, (VSB) (6) (Seabloom and Hanson (2004) Constructed Wetlands: A Critical Review of Wetland Treatment Processes. University Curriculum Development for Decentralized Wastewater Management) for a water polishing, and finally it passes to a chlorine contact channel (tertiary treatment) (7), to be discharged to a pipe carrying it to a near river. The STAR includes stage 4 which is not a part of the treatment but which is essential for the operation thereof, it is a drying bed to clean from both the UAF and the biodigester the built sludge (4).

One of the most important features describing the STAR of the invention is the easiness to install it in a sloped or inclined land, which determines the flow to be made by gravity, this makes of the STAR an efficient system without the need of energy (pumping system) for its operation. In Figure 3 there is a scheme of the hydraulic profile of the STAR including data on the land slope in each one of its stages as well as the disposition kept among the equipment of the 7 stages to each other, or each part of the equipment to each other, when such arrangement or dimensions are essential for the PTAR performance. When having a difference of 1.50 m, between the piping dragging level with respect to the natural land wherein the treatment plant is to be constructed, it may be guaranteed that the process does not require energy for its operation. If there is not such a slope difference, the problem is solved by installing a pumping sump between stages 2 and 3.

**First stage: Intake volume regulation**

The operation of the system described in Mexican Patent 265382 included the discharge outlet installed as an integral part of the pretreatment only at a distance of 30 cm from the first thick screen, this case was experimentally assessed and it was determined that this caused a low efficiency in the system, since the rainwater leakages to the drainage system, and the variation in volume of the served water during the day caused that bad results were obtained at the water intake control to the treatment plant; we could conclude that the high variations in the load volume due to rain leakages, resulted in a decrease of the system efficiency described in this patent.

The above resulted in the addition of a stage previous to the intake water regulation, in this case it consists in the addition of a volume regulator box being the proper solution to control the wastewater flow variations, caused by the inhabitants consume (the use of water is higher in the mornings due to personal hygiene and house cleaning activities; for the same reasons the volume is medium in the afternoons; and the use of water at night is minimum) besides to those situations wherein important rainwater leakages are present. The addition of the intake regulator box is one of the modifications characterizing the STAR of the present invention which resulted in a necessary step for the operation of the system regarding the volume management, it is easy to use since it is manually operated; with this regulator box the volume can be kept at a constant flow.

According to the diagram in Figure 4.A and in Figure 4.B, the first stage of the STAR of the invention consists of passing the water from the drainage system through the intake regulator box having the box sump (8), the size of the box may vary in terms of the sewage piping size, an influx pipe (9), a discharge pipe or surplus (10) having a guide frame indicating the level to carry out the discharge, a hand-operated regulating gate (12), an discharge pipe for interconnection with the pretreatment (13).

The drainage water arrives to the box in concrete piping to the STAR, between them there must be a level difference of 1.50 m; this level difference may be used from stages 1 and 2 but it may be applied in steps 2 and 3. The regulator box works as a manhole, which also has a gate allowing it to control the inflow to the STAR, and a steel guide frame. After, a wood board is installed whereby the water excess is discharged if necessary, as stated by the regulations, in Figures 4.A and 4.B the box aspect is illustrated, with the inlets and outlets arrangement in the plant and sectional views.

During the system operation, water volume regulation stage is critical for a great improvement of the efficiency of the system as a whole, since only the volume supported by the system is taken. The addition of the volume regulator box not only allowed a good operation of the whole PTAR, but it improved the expected performance and compliance of the established parameters.

**Second stage: Pretreatment.**

The system continues to the second stage of pretreatment or primary treatment, consisting of the water passing through a thick screen in order to separate bigger solids. In this stage a wastewater control volume entering the plant is not required, only a water rate decrease occurs and a constant flow rate is guaranteed in order to keep a homogeneous flow rate during the whole process. In Figures 5.A and 5.B the pretreatment elements and their arrangement are illustrated.

Pretreatment consists in the water flow from the regulator box (13) by an inlet channel with a minimum of 30 cm width (14), having 2 hand-cleaning inclined screens or grits (15, 16), spaced to each other by a distance of 0.30 m. The first screen is made of 1½ in wide and 3/8 width strip bars, with an space between bars of 2.54 cm; the second grit is made of 1½ in wide and 3/8 width strip bars, with an space between bars of 1.27 cm, the spacing between the bars and the grits is suitable for thick mesh to separate big-size solids commonly causing issues in the subsequent operations (such as bags, plastic bottles, sleeves, stones and other objects) and for hand-cleaning according to Crites and Technobanaglous, 2000, and which in this case is a municipal PTAR. The concept of operation and maintenance savings is considered. Following, the channel diverts and continues to two horizontal-type longitudinal channels (19) each one having a manually operated inlet gate (18) in order to determine which of the channels is to be used while the other may be cleaned or receive maintenance. Both channels are wastewater desanders, and at the end it passes through a sutro-type weir at the end of each channel, made of ¾ in steel plate (20) in order to maintain a maximum water flow rate of 0.30 m/sec to allow the sand to sediment. In these desander channels by the effect of a friction force balance between the liquid and solids, sedimentation of particles such as ashes, egg shell pieces, bone chips, seeds, and other pieces of similar size and weight, usually referred to as sands, are deposited at the bottom, allowing their manual removal. Their dimensions vary in terms of the flow rate to be treated by the plant.

It is worth pointing out that the main parameter to control in this operation is the horizontal flow rate, the rate it has from the regulator box is ideal, but at the end of the second stage a rate change is required usually got with a Parshall channel or with a proportional or sutro weir (Reynolds and Richards, 1996, Metcalf and Eddy, Inc. 2003; Crites and Tchobanoglous, 2000) located at the end of the channel. Advantageously, at the end of each pretreatment desander channel proportional weirs (20) are located, controlling the horizontal flow rate.

As mentioned above, the natural slope of the land wherein the treatment plant is to be constructed is an important factor, since if there is a general difference of 1.50 m of the dragging level of the pipe with respect to the natural land, it guarantees that no pumping equipment will be necessary. In Figures 5.A and 5.B the 2nd stage is illustrated, when there is no minimum difference of 1.50 m in the level between this stage and the next one, then a pumping system is included (21, 22, 23, 24) and the connection to a regulator box (24b) is pointed out, not illustrated, this decreases the inlet rate. Figures 6.A to 6.D show the aspect of the elements in the 2nd stage when no pumping system is required.

The horizontal flow desanders used are suitable since no mechanical or chemical implements are required for removing this kind of water contaminant particles. The fact that two channels have been constructed and to be isolated from each other is an accepted and recommended practice for this kind of systems, since it allows an uninterrupted operation of the channel with maintenance and operation works daily required. The effluent from the pretreatment is collected in a collecting box from which it enters the flow distribution boxes of the biodigesters.

Finally, the residual water free from thick solids and sands will concentrate in a simply collecting box (24c) shown in Figure 6D and which is used when a pumping system is not required, from which it will pass to the next treatment preferably by the gravity action when overflow, if the land slope favors this, however, during the development of the STAR a pumping system was tested (21, 22, 23, 24 y 24b) for the water flow to the treatment equipment of stage 3 (anaerobic biodigester), the pumping may be driven by solar energy.

Example 1 describes how the evaluation is made for the second stage. 2nd stage of the STAR of the invention had a good particle removal.

Adjacent stages: 3, 5 and 6 form together the biological or secondary treatment characteristic of the STAR of the invention, and relates to a series of methods for the removal of particulate and soluble organic contaminants in order to obtain the suitable quality of the water to be discharged at the end as stated by the Mexican regulations. These are biological treatments, mainly anaerobic: biodigesters (stage 3), up-flow filters UAF (stage 5) and subsurface flow constructed wetlands (stage 6) which do not require the extension or area like those of subsurface flow; besides, the subsurface does not generates bad odors nor mosquitoes larvae are grown, besides, better quality of the water is obtained compared to the subsurface ones. Now, each one of the following stages will be described with detail.

It is worth mentioning that one feature of the following stages of the STAR of the invention is that in no one taken independently the expected quality is obtained for the treatment type when partially assessed, however, this is not relevant since the object is to obtain an acceptable quality of the water under the regulations at the end of the process in spite of the fact that the intermediate stages do not achieve the expected efficiency for the treatment type. The importance of the STAR of the invention: a primary, three secondary and one tertiary, arranged as 7 stages in series or as a processes train, wherein the addition thereof results in water of acceptable quality under the regulations and this STAR has an efficiency of 90% to 100% according to the standard NOM-001-SEMARNAT-1996.

### Third stage: Biodigestion.

The third stage corresponds to the anaerobic digestion; as per the definitions of different authors (Crites and Tchobanoglous, 2000; Metcalf and Eddy, Inc., 2003: Reynolds and Richards, 1996; Lee and Dar Lin, 1999) the biodigester system is a septic tank since its functions are to sediment, store and digest at the bottom of each chamber, total suspended solids present in the raw wastewater.

One of the features of the STAR of the invention is related to the biodigester design, it comprises 6 hoppered zones necessary for the required development in this stage, during the system development only 3 hoppered compartments were initially assayed, and by the accumulated experience when increasing the number of hoppers, it was concluded to use the 6 compartments shown in Figures 7.A to 7.D, 8.B and 8.D. As a reference, in Figure 8.A, the operation of a conventional biodigester is shown. Then for the present invention, the system comprises a biodigester being divided widewise in 2 compartments or modules, each in turn longitudinally sub-divided in 2 more compartments (26 and 27), and the first has two zones or hoppered chambers, i.e., in an inverted cone-shape (28, 29); each one of these hoppered zones has 3 meters length and the second (27) a single zone or hoppered chamber (32) with 4 m long, so this is a total of 6 independent septic tanks or hoppered compartments, four having 3 meters each and two having 4 meters as shown in Figure 7.B.

The biodigestion system of the invention includes an anaerobic biodigester allowing to control the flow rate and organic load variation, and to homogenize the wastewater; solids sediment at a 60 to 70% and will concentrate at the hopper for their following removal. The biodigester system of the STAR of the invention illustrated in Figures 7.A to 7.D, is comprised by two armed concrete tanks or compartments, since this material better stands the gases attack generated during the biodigestion, such as methane and carbon dioxide (biogas). Both tanks (26, 27) are fed with water from the intake distribution boxes from the 2nd stage (24c), the affluent intake pipes (25) come from the distribution boxes (24b or 24c depending on if it comes or not from a pumping system). On the slab covering the biodigester (39) and above the center of each hopper, there are concrete lids for the maintenance of each one of these hoppers (34, 35, 36). Compartment (26) communicates with the next compartment (27) through a pipe (30) located at 1.50 m height (31). Compartment (27) has a hoppered zone (32), a maintenance lid on the slab (36) and a discharge pipe (33) to continue to the following stage. At the slab (39) level there is a biogas venting system located at the center of the 2 last biodigester chambers, it comprises the biogas collection box or chamber (41) made of concrete, and fed by 2 PVC pipes (40) supported over the slab whereby the so corrosive effect is prevented of this on the slab according to the experimental observations, thereby avoiding the premature worsening. The biogas recollection box (41) is a zeolite strata capturing the methane and carbon dioxide produced by the microbial degradation activity.

Within the biodigester, the fats, oils and other light material will accumulate in the surface forming a foam, then the effluent is collected below the foam layer but the highest possible above the bottom. As sub-products of the use of this system are the digested bottom sludge and the biogas generated by the sludge digestion. The tanks in hopper shape depicted in Figure 7.A allows the storing of the stabilized sludge and being the product of the organic and inorganic matter mineralization; each hopper has a draining pipe or sludge outlet (37) made of PVC which flow connects with three fixed-stem valves allowing to control the stored solid volume grouped in 2 holes located at the biodigester parts (38) and then it connects with the drying beds (4th stage). Treated water leaves the biodigester through a PVC piping (33) also coated with mortar, later, this joins in another piping leading to the primary distribution box of a filter system conforming the following stage.

The two continuous hoppered zones (28, 29) of compartment (26) improve the sedimentation process, the water passing (30) towards the third hoppered compartment is at a level only allowing the passing of the water well decanted and being at the most superficial part, such that the dragging of the fat and foam formed at the surface is avoided. As it also has a flow rate that does not allow turbulence formation, this avoids the decanted sludge mixing in this second hoppered compartment. In addition, the height of both the inlet pipes (25) and the communicating pipe (30) and the water flow rate entering both, is designed such that it has a circulation effect of the water directed to the bottom and then ascending to the discharge pipes (30); this flow is pointed out with curved arrows at hoppers in Figure 7.A, so the sedimentation process is promoted for the whole volume of water passing though this process. With this design the efficiency of the system in this stage is that required for a well performance of the STAR of the invention.

During the development of the invention it was also concluded that the arrangement in modules and the hopper number of the biodigester designed for the operation of the STAR of the invention, besides facilitating the bioreactor operation, it helps to minimize the solid dragging at the bottom, separating them such that the remain in the tank enough time to have an anaerobic digestion. By including a higher number of hoppers implies the surface area increase of the tank bottom, they promote a uniform and well defined water flow. This represents a considerable advantage to increase the sedimentation rate and therefore the biodigester performance. It is to be mentioned that in order to achieve this flow, it was also required to carry out very specific calculations and experimental assays, thus making this design one of a kind. The global result given by this biodigester design is a better performance for the purposes of the STAR of the invention.

When the pumping system is not used, the biodigester compartments are equally fed by means of the flow distribution box (24c) made of concrete, which distribution mechanism is formed of PVC piping. When the pumping system is used, the biodigesters are fed by the rate regulator box (24b) being located at a corner above the upper slab of the biodigesters, and feed the center of each compartment. It is important that the exposed PVC piping communicating the boxes or the tanks, in all the above-described stages, be coated with mortar and supported by concrete blocks at the required risen parts; the mortar has an isolating function from the environment, since the PVC in outdoors tends to deform and to decrease its structural strength.

The sludge is retained in these hoppers for an average period of time of 6 months at the end of which it is removed by hydraulic load through the draining pipe (37) being located at the bottom center of each one of the hoppered zones (28, 29 and 32). In this stage, the average time of hydraulic residence has been adjusted, before the development of the present invention, it had been established that for the biodigestion process a minimum residence time of 18 hours for the water was enough, but as a result of the experimental assessment and as a part of the development of the present invention, we have established that the minimum residence time is 24 hours at room temperature ranging about 20°C $\pm$ 7°C with constant water supply. We have proven that all this adjustments are critic factors to optimize the STAR performance.

For the general maintenance of the biodigesters, it is required the already explained sludge removal and also of the foam formed at the upper part, these tasks are easy with the biodigester of the invention since it is not underground, being one more feature distinguishing the invention, which allows its sludge extraction systems to work by gravity and to have an easy access to the upper part for foam removal as it has accessions for this task. In addition, it has a single biogas transporting system without requiring phase separators, or biogas collection, which also simplifies the operation of the system without reducing its efficiency. It is worth mentioning that this STAR does not have a significant biogas production, and is rather considered low, estimated as 24.4 m$^3$/day representing about 4% of the total biodigesters volume, thus being unnecessary a treatment system for this by-product and venting it to the atmosphere suffices. In Example 2 the assessment to the third stage is described, carried out using minimum, medium and over-flow rates as the biodigester operation is to be seen with respect to the inlet flows, and which obviously are related to the retention times; it is proven that the biodigesters theoretically stands this fluctuation given all day long.

Fourth stage: Drying beds.

Drying beds are the sludge draining system most used in municipal plants since is not expensive (Lee and Dar Lin, 1999), but they require more area than other treatments, but having the advantage of a simple and economic operation. For the treatment of the sludge deposited and generated in both the biodigesters (3rd stage) and the anaerobic

filter (5th stage), the STAR of the invention has a pair of draying beds at a suitable level for the biodigester, and the other at a suitable level for the UAF, located at a part of the UAF. The design of the STAR of the invention implies locating them under the bottom level of each generating treatment with the purpose of withdrawing the sludge taking advantage of this situation, as can be seen in Figure 3.

In Figures 10.A and 10.C the drying bed scheme is seen, during the process these will receive the previously sedimented material both in the biodigester hopper as in the UAF bottom through a pipe (52), this sedimented sludge is let out at the end of a 6 month period. The inlet material flows through the non-rising stem valves (37) located at a part of each biodigester hopper, and from the valve box for drainage (42) of the UAF without requiring pumping, this because the sludge discharge pipe (37) projects up to the upper biodigester part and above the water level (37a) causing a suction process when the box valve 38 opens then the sludge is easily removed; this venting mechanism is illustrated in Figure 7D. The effect is similar for the UAF draining but in this case the sludge outlet effect occurs without the need of a suction pipe and it only depends on the valve opening of the box valve 42 (Figure 9). The drying beds are made of concrete, the enclosing wall is of 1.0 m height and have a gravel strata having a diameter of 2 to 3 inches (55). After, another gravel layer of 1 inch of diameter (56) and at the end a sand layer (57). In order to avoid the subsurface passing, a layer or clay improved with lime is placed at the bottom, with a ratio of 1:10 (53) with a minimum slope towards the center, here a perforated pipe is installed (54) in order to collect the excess of water in the sludge.

Fifth stage: **Up-flow** anaerobic **filtration.**

The effluent water from the biodigester goes to the fifth stage of biological treatment consisting of its circulation through a packed or fixed-bed filter, which by its flow and reaction characteristics may be classified as an up-flow anaerobic reactor filter (UAF). As is name say, one of its characteristics is that the inside water flow, falls to the tank bottom by gravity to the uppermost part where it is collected and it is carried by channels to the next treatment. The water flow passes through a high-porosity chemically and biologically inert material used as a support media to microorganisms proliferation, which when forming films over the material, increase the permanence inside the reactor (cell residence time) and its contact area with the wastewater, thereby improving the removal efficiency of organic contaminants and the permanence of the solids and biosolids in the reactor. Generally, the flow in a UAF generates a concentration profile, both of contaminants as of biological sludge, similar to that found in piston flow-type reactors and having the following advantages: efficient working capacity even with high organic loads, high capacity to accept sudden changes in organic load, easy and quick adaptation to different residues and high removal capacity of suspended solids.

In this stage, contaminant organic matter biological degradation continues in the STAR. Here, bigger size molecules are degraded by solid retention and decreasing of organic load. This element has good yields when the organic load is low and the solids volume is very low. In this stage, BOD and TSS achieve a reduction from 25 to 30% more than that obtained in the previous stage (biodegradation). Hydraulic residence time in this stage is 12 hours, being the optimum time. In the present invention a UAF filter was designed whereby the flow rate passes through the whole cross-section thereof (uniformly) and not only at the center as conventionally, and having an already defined stone size, features improving as a whole the system efficiency.

Another feature influencing the optimum operation of the UAF being designed for the STAR of the invention is to use as filtration means o packing (petrous material zone (45b) in Figure 9.A consisting totally in rounded river stones or volcanic stone exclusively of diameters from 6 to 10 inches (about 15 to 25 cm), thereby avoiding clogging. Before, the performance with stones from 6 to 8 cm was assessed as filtering media, constantly obtaining clogging events. In general, the UFA allows a change in ordering of the packing material which is the inert filtrating media (rounded river stones) depending on the amount of solids entering. Usually they have big stone at the bottom and consecutive layers of stones are placed smaller each time, this prevents clogging and a decrease in the contaminants removal efficiency (Montalvo M. and Guerrero S., 2003), but due to the selection on the type and size of the filtering media described (stones from 4 to 6 inches), this removal or change in filtering media is not necessary for the STAR of the invention, since clogging events are not present thereby making easier its operation. In view of the above, we consider that the selected size and the agreed disposition of this filtering material is another feature defining the invention.

The UAF selected for a good operation of the STAR of the invention is a UAF having a false bottom, this is a gravity sludge draining system and a previous treatment for solid retention, then being capable of minimizing the clogging. With respect to the use of pumps, the UFA used for the STAR has a gravity hydraulic arrangement, avoiding the use of pumps, taking advantage of the land slope, which is very convenient in small communities, where energy savings is a priority.

In Figures 9.A and 0.B the UAF is illustrated, designed for the STAR of the present invention. It possesses a primary box distributing the flow to the semi-circular secondary boxes (43) by a pair of PVC pipes coated with mortar; the water enters the anaerobic filter through this two secondary distribution boxes (43) being in semi-circled shape, and located on the upper slab, these boxes provide a better control and natural cleaning. The semi-circular boxes distribute the inflow uniformly at the UAF bottom through a series of pipes (44) radially projecting to the false bottom (45). In more detail: these secondary boxes (43), receive the affluent at the straight part in a chute with the tooth, overlapping part; thus, the water is carried from each secondary box to the UAF trough 11 mortar-coated PVC pipes (44) from which it will ascend through the false bottom (45) dividing 40 cm from the lower slab to the filtering media and the flow ascend to this filtering media bed (45b). The UAF is formed by a 10.4 x 18.4 m concrete tank, the appearance of some of its parts is shown in Figures 9C and 9D. Gases generated in the distribution boxes are removed by wasters (51). Water channeling is made through PVC pipe which is always coated with metallic mesh and concrete, since PVC piping exposed to the sun damages by the action of UV rays. In previous designs, copper pipe was used being non-efficient due to its low corrosion-strength.

The UAF of the STAR of the invention illustrated in Figures 9.A to 9.D was designed with three collecting channels being located at the UAF upper part, but covered by the upper slab, and each has several access by removable concrete-lids (50), these channels are arranged such that they allow an excellent hydraulic operation, they are two at the parts (46) and one central channel was added (47); each channel or chute has 20 cm deep and straight overlapping walls carrying the treated water to a general collecting outer channel located at the edge of the UAF wide part (48) which was also added to this unique design of the STAR, then transporting the effluent by the outlet (49) to a collecting box (49b), to be carried to the constructed wetlands corresponding to the 6th stage. The incorporation of the three channels with this arrangement improved the hydraulic operation and increased the individual efficiency of the UAF by 20% with respect to the use of UAF having only two central channels, then being a design adding a significant advantage for the STAR of the invention.

Without having the false bottom (45) inside the UAF, a future clogging problem would be evident, because at the farthest areas from the affluent piping there would be an increasing rate lower than in the closest areas. Advantageously, however, the use of the false bottom in the STAR of the invention promotes uniformity of the liquid before traveling through the filtering media. Besides, the pressure drop calculation due to the packing zone is low, about 0.0113 Pascals. Likewise, the false bottom is an accepted and recommended practice in these systems (Montalvo M. and Guerrero S., (2003) because it allows to accumulate sludge that for its characteristics cannot remain suspended in the interstices or adhered to the filtering media. The sludge then shall be removed to avoid an excessive build up and the resulting dead zones decreasing the UAF useful volume.

Finally, the treated water effluent from the UAF is collected in the upper part by the three channels or chutes, being two marked as (46) and (47) characterized by their straight edges known as wide edges (Fox & McDonald, 1986), based on the experience acquired during the development of the STAR of the invention. At least three of these chutes are required for an optimum hydraulic travel and efficiency increase. Generally the chute edges are preferably of a thin and tooth edge (triangle-shaped with a vertex pointing to the floor) since this shape makes easier to measure the flow rate. However, the main purpose of the chutes is to collect the effluent and not to measure the flow rate, then, the decision of using thin or wide edged is evidently a matter of design styles.

Example 3 describes how to assess the UAF as designed for the present invention. Also, it is worth mentioning that the UAF removal efficiency is at the lower limit reported in bibliography, which is normal for the STAR design as the organic load managed is very low compared to the loads used in a UAF of know wastewater treatment systems. In order to increase the UAF removal of the present STAR, a reduction in the filter volume was assayed. Finally, it was determined that it was necessary to keep the filter volume in order to keep the required flow rate to achieve the expected final performance.

Importantly is to distinguish the STAR of the invention from other known systems of the prior art: stages 3 and 4 of the STAR of the invention may be technically substituted by using up-flow anaerobic reactors known in the state of the art as UASB reactors (Up-flow Anaerobic Sludge Blanket), also known as RAFA (acronym in Spanish of Reactor Anaerobio de Flujo Ascendente), which are a type of tubular bioreactors operating at continuous regime and up-flow, that is, the affluent enters at the reactor bottom part, travels the whole length and exits from the upper part. UASBs are anaerobic reactors wherein microorganisms form bio-granules together, sediment forming an active slurry, produce a high biogas volume which may be used as fuel. UASBs, however, are very unstable systems with flow changes, then requiring a sensitive load control and also of trained personnel for their operation and maintenance.

Sixth stage: Constructed **wetlands.**

After, the effluent wastewater from the UAF passes through a series of constructed wetlands. This is the 6th stage of the STAR. Constructed wetlands used in the STAR of the invention are of the subsurface type, known as VSB (Vegetated Submerged Bed). They were chosen due to their advantages, since opposite to the surface flow wetlands, VSB do not generate bad odors, nor insect growing, they are non-influenced by possibly occurring low environmental temperatures and the required surface size is lower. Used as the single method of secondary wastewater treatment, it is only suitable for reduced inhabitant populations, and in general, they are considered as an expensive method for the required granular material and land extension. However, while developing the present invention it was proven that the VSB used combined with other methods, such as has been designed for the present invention implies no such high costs. Constructed wetlands may replace the secondary wastewater treatment, and, under certain conditions, also the tertiary and primary, however, when they are used as the single treatment system they have relatively large retention periods of time (usually weeks) thus requiring a considerably big land to achieve the expected efficiency and large periods of hydraulic residence in the wastewater plant.

The background of the constructed ponds or wetlands (or stabilization lagoons) as those used in the design of the STAR of the invention, basically consists of 1 to 3.5 deep reservoirs wherein the wastewater is naturally stored, that is, without adding chemical additives or energy; here bacteria and algae degrade the organic matter and remove pathogen microorganisms. The depuration efficiency of the wastewater in this wetlands mainly depends on the area weather conditions: temperature, solar radiation, local wind rate, etc., and of the residence time of the water in the pond. In optimum conditions in this kind of systems, a decrease of about 70 and 90% in DBO and up to 99% of pathogens is achieved (Rojas, J.A., 2005). The operation of constructed wetlands is based on three basic principles: biochemical activity of microorganisms, the oxygen input through plants during the day, and the physical support of an inert bed serving as a support for plant rooting and filtering material. As a whole, these elements remove dissolved and suspended materials in the wastewater (Reed in Kolb, 1998) through sedimentation processes, plant action, absorption, chemical reactions and volatilization (Stearman et al., 2003), but mainly, they degrade the organic matter to mineralize it and to form new organisms (Hu in Kolb, 1998). There are also constructed wetlands modified to have either a surface or subsurface flow (underground).

Surface flow constructed wetlands, also referred to as free surface or FWS (Free Water Surface) preferably water circulates through plant stems and is directly exposed to the atmosphere with a maximum depth of 0.6m. These are complex systems since the purpose is for them to be as similar as those natural, with both aerial and submerged plants and aquatic animal life in some cases (USEPA, 2000; Rios, Gutierrez, and Aizaki, 2007). In view of the above, they have several variables involved in the process design, then only highly-trained long-experienced personnel in this field uses such kind of treatment.

Constructed wetlands of the VSB type (subsurface flow) are characteristic for the water circulation made through a granular media, with a depth near 0.6 m. Vegetation is planted in this granular media and the water contacts the plant rhizomes and roots; the flow may be horizontal (water enters through an upper end and is collected at the other end at the lower part) or vertical (water enters at the upper part leaking vertically through the inert substrate and it is collected in a drainage system located at the bottom of the wetland). Constructed wetlands of the VSB type are mostly used in municipal wastewater treatment as both secondary treatment and polishing, since less variables are involved and are more dictated inside by hydraulics than for the biological process.

In the design of the STAR of the invention this 6th treatment stage was included. The main factors considered in the design of the wetlands were the filtering media, the depth of the useful volume, the number of treatment zones, the plant type, and their dimensions, as well as the arrangement thereof and having a constant flow. The wetlands of the invention currently are a wetland system construed in a modular manner, all with subsurface flow and packed with rounded river stone or volcanic rock, each module has a secondary distribution box for the flow from the UAF (49b) and a collection box for the outlet affluent converging into a general collecting box (73).

With respect to the dimensions, the length-width ratio described in the literature for the stabilization lagoons is 10:1 required for the extensions used in this kind of treatment. As a result of experimental assays for the wetlands of the STAR of the invention, a ratio length to width from 1:2 to 2:2 was determined, and the size of each wetland was initially determined as, but not limited to, 12 x 24 m length-width. The number and arrangement thereof is as described below. In Figure 11 the special design for a wetland module as devised to work in the STAR of the invention.

Wetlands are formed by a concrete perimeter wall (61) whose walls are coated from the bottom and up to the upper outer part by an impermeable membrane (78) which forms a single piece thermally sealed at the joints and fixed to the walls by aluminum bars held by 1 x ½ in galvanic steel screws (strip) (79), as shown in Figure 11.C, thereby preventing leakages to the underground.

The filtering media used for the STAR of the invention in the constructed wetlands is the same than for the UFA, since river stone is also used but of different size, or volcanic rock, then initially fulfilling the essential features for the task, which in Figure 11.B is illustrated as petrous material (77). At the wetlands base this petrous material is disposed as gravel strata, river stone or volcanic rock having different diameters: 3" to 4" at inlets and outlets (69) and from 2 to 3" at the center (68), thus forming a strata having 0.60m height, and later a layer of 10 cm (72) is placed of selected 1 inch gravel to avoid that the temperature of the water in treatment process within the wetland to get too hot or too cold thereby stopping the function of the aerobic bacteria carrying out the degradation of the organic matter. In addition, the gravel layer works as an odor confinement.

Plant material (70) is located over the gravel strata, for example, plants of the *Pragmatis typha* family, referred to as *typha domingenisis Pers* and *Thypha latifolia,* which through the roots, transmits atmospheric oxygen inside the wetland, thereby generating aerobic and anaerobic areas allowing the decrease of DBO, of the TSS, phosphorous and ammonia sulfur.

An equipment to increase oxygenation of the constructed wetland is used when it is determined that the organic load is higher to that previewed which may cause solid build up and with the piping (67) pointed out in Figure 11.A, air will be injected with the same equipment for oxygen supply used in the intake pipe. For this equipment, solar energy usage shall be considered in order to avoid an increase in the operation costs.

A perforated pipe (73) is at the bottom in the coarse gravel layer or volcanic rock, and it is characterized by being perforated lengthwise only at the bottom, its function is to prevent the wetland clogging, and to incorporate an air injection system to avoid clogging. The pipe projects towards the surface with an elbow (73b) at a length of 70 cm, is movable so it is possible to manually incline it in order to modulate the wetland water level. Experimentally it was possible to see that this change in the water level has a final effect in the manner in which the plant grow, such that, if the tube is inclined, the plant roots grow downwards, towards the bottom, then improving the depuration efficiency required when the organic matter load (BOD) is high. When straightened at 90°, these roots grow more extended and the efficiency decreases, but there is less stress, improving its operation when the organic matter load (BOD) is lower, such that this effect is particularly important for the management of the wetland efficiency, then resulting in a system adaptable to natural variations in the quality or amount of wastewater. This design is other particularity characterizing the STAR of the invention.

In these examples, the constructed wetlands operate in parallel. The water feeding the constructed wetlands is transported from the general collecting box (49b) indicated in Figure 13, by means of the mesh and mortar-coated PVC piping, towards a primary distribution box (62) made of concrete, perpendicularly dividing the flow in two (64) and again in two (66) as indicated in Figure 11.A. The number and distribution in parallel of the two constructed wetlands is optional according to the requirements of the population, and it depends on the average flow rate to be treated. One advantage of the STAR of the invention is that the number of constructed wetlands may grow when the volume of water to be treated also increases, or otherwise, the reason may be to improve the effluent quality. Figures 13, 14 and 15 illustrate three different designs of a PTAR with different number and distribution of each one of the 7 essential elements of the STAR. In stage 6, they have a parallel operation using 2, 4 and 8 modules of wetland and therefore these designs are some examples of how the invention may be carried out suitable, and also they are embodiments thereof. The amount of wetlands in the STAR may be from 1 to n, depending on the needs, and the calculations could be made by a skilled in the art of the invention. Their placement is in parallel always.

Hydraulic conductivity inherent to the filtering media as well as other important values for the hydraulic operation in these systems, such as the depth and load losses, have been technically assessed as described in example 4. The flow is horizontal in these wetlands, and with the inlet division (multiple intake) the waterflow under treatment travels uniformly in a piston-type flow, improving the constructed wetland efficiency with no clogging effects, which are very frequent in the constructed wetlands having an horizontal flow, fact resulting from a good system design (module size and distribution) as the effluent has been treated by the bioreactor and the UAF, thus having less residual organic matter suspended compared to any kind of constructed wetland when operating as the only secondary treatment for the wastewater. Importantly is that the STAR efficiency is the sum of each stage efficiency.

With more detail of the distribution in parallel of the wetlands as shown in Figures 14 and 15 for the STAR of the invention, the effluent flow rate is first divided in two (in order to feed 4 wetlands) or in 3 (in order to feed 8 wetlands) by a main distribution box (49b). In the case of 8 wetlands, each one of two flow rates feed two wetlands, and the third flow rate feeds four wetlands. With these parallel distributions, characteristic of the STAR of the invention, if it was a primary affluent, it would be an error of severe consequences, however, for our case it works with excellent results because this stage is for polishing since the wastewater has already had an important biological treatment. Further, according to that recommended, various treatment zones would be required with different stone sizes to carry out the polishing, but for the STAR of the invention a single treatment phase is enough since the water has already been biologically treated. Therefore, the constructed wetland distributions described herein works only for the STAR of the invention and as a result, is an additional distinctive feature thereof.

Worth to mention regarding the passage of the wastewater through the constructed wetlands is that by being modulated, they have to receive the same flow rate, if not, some modules would have higher loads than others, which would affect the removal efficiency of the treatment in general, besides to the clogging issues possibly occurring. The flow distribution mechanism of the STAR of the invention is based on the placement of effluent piping from the boxes at the same level, so the water overflows at the same time from each piping. This way it may be confirmed that the flows are equally divided in the effluent pipes located at the same level, even in various collectors at a time.

The last factor to consider non-requiring a technical analysis, understanding that it is no necessary to carry out mathematical algorithms to issue an opinion, is the presence and type of plants used in the wetland. Currently, there is no convincing information demonstrating how plants improve contaminant removal in constructed wetlands, including if one species is better than other to this end. The use of local plants is preferred, as mentioned in this case, *Typhia Latifolia* (tule) has been used, which also may be used in handicrafts made of this material when pruned. In this stage, plants absorb metals present in the water to be treated, and inert materials from the filling allow the removal of phosphorous by absorption. At the end of the wetland, a perforated PVC pipe is placed, to recollect the water treated and to send it to the chlorine contact box corresponding to the 7th stage of the STAR. In example 4, the theoretical assessment made to the removal capacity of BOD in constructed wetlands is described, using the design parameters of the invention.

**Seventh stage: chlorine contact channel.**

At the end of the biological treatment water passes through the 7th and last stage, consisting of the circulation through a channel designed to contact chlorine hypochlorite (chlorine contact channel), having a sigmoid path in a tank made of concrete. In this channel the plastic tank may be installed, storing calcium hypochlorite at any time and at the required dose. The channel design allows the required retention time calculation in order to, by the chlorine effect, achieve the decrease of the pathogens present in the effluent. At the upper part a water tank may be placed having the suitable chlorine solution concentration for dosing.

In Figures 12.A and 12.B the channel parts for the chlorine contact are depicted. It is comprised by 5 rectangular segments (83) communicated at their sides and opposite alternated corners of each segment walls (84), thus giving it the characteristic channel-shape with a zigzag path, having the purpose to allow the chlorine to act on the pathogen microorganisms remaining in the effluent such as virus, bacteria and protozoan parasites, and to reduce them. Above the first segment (83) and at the affluent intake (80) a deposit with calcium hypochlorite is placed (81), then the chlorine is incorporated to the system through a pipe (82). The most important parameters involved in the chlorination are the contact time and the dosing (Reynolds and Richards, 1996), as both define the interaction of this disinfectant agent with the pathogen microorganisms and other organic compounds in the water treated, resulting or not in a proper processing.

The chlorine contact channel is located at the end of the STAR and in this stage is assured that the water treated to be discharged has the required disinfection to fulfill with the Mexican regulations in force.

As mentioned above in this document, the main assumptions for the wastewater treatment system of the invention in each of the stage design is energy saving and a simple operation, then, the use of drying beds is a convenient system to this end.

When assessing each stage is noticed that the optimum efficiency has not been achieved individually, this is logic due to the operation design of three secondary treatments in series which commonly are used as a single secondary treatment; in some cases, the combination of two secondary treatments is used. One of the reasons why the assessed treatments separately are indeed compared to the removal obtained in systems not used in a combined manner as in the present invention, is that the pretreatment, specially the desander channels, were designed to sediment smaller particles than usual, the addition of a fine screen mesh (about 15 mm) would be more convenient to this end, this in terms of the theoretical BOD removal efficiency resulted in that the secondary treatment more efficient of the PTAR after the assessment was the wetland zone, which is not conventionally expected since the wetlands in general has a water polishing function, and one would be expecting that most of the removal would be carried out in the biodigesters, and further in the UAF. Therefore, the STAR of the invention should be assessed as a whole by its final results, and not separately.

The relevant aspect of the STAR of the invention is the final result of the stage combination wherein 3 are different kind of secondary treatments, and of the optimizations made; since these stages together produce an effluent finally fulfilling and overcoming the Mexican Regulations in force. PTAR designed based on this STAR in operation, demonstrate the efficiency obtained at the end in the wastewater depuration, and actually it does not matter which stage made more or less depuration. As described above, the STAR of the invention has a suitable efficiency to comply with the official standards, and each one of the stages gives a percentage regarding the depuration, stage 2 gives 5%, stage 3 gives a 35 to 45%, stage 5 gives a 25 to 30%, stage 6 can give from 25% to 40%. Importantly, the aeration system disposed in the wetlands (in Figure 11.A the pipe 67 is indicated belonging to this system) improves the oxygenation conditions of this stage resulting in a more efficient residual matter degradation, this elements greatly increases these wetlands efficiency, and therefore, is a preferred embodiment of the invention.

The object of the invention is to provide an efficient wastewater treatment system (STAR), having a low cost of energy consumption, easy to operate and to maintain, being capable of withstanding volume fluctuations and organic load fluctuations without an efficiency decrease, efficient and possible to grow without having to stop the treatment process, without lowering its capabilities. This description provides all elements to design a PTAR on this base.

The STAR claimed as the invention is a process for wastewater treatment comprising 7 stages: 1) recollection and passing through a volume regulator box, 2) a primary treatment, pretreatment, to separate coarse solids and sands, 3) a first biological treatment of anaerobic nature consisting on passing through a biodigester, 4) an intermediate step between step 3 and 5 consisting of dehydrating the sludge in bed for an easier further management is an essential step to maintain the operation of the treatment train, 5) a second biological treatment of anaerobic nature consisting in a passing through a UAF; 6) a third biological treatment of aerobic nature consisting on the passage through constructed wetlands, 7) a tertiary treatment consisting in it passing through a chlorine disinfection unit. In a further embodiment of the invention, the wastewater treatment plant (PTAR) characterized by using the whole described process besides including all distinctive features determining the expected performance described-above.

In another embodiment of the STAR and PTAR of the invention, the adaptations in order to increase its capacity when required by the population increase, can be made without stopping the operation, with the proviso that said growth is not much bigger than the estimated. And even when the flow to the PTAR could be higher to that designed, the plant makes the treatment to the wastewater. In Example 5 the overview for a PTAR design are described based on the STAR described considering a population of 5 thousand inhabitants and with the option of growing through the module adaptation.

Embodiments of the invention are each one of stages 1, 2, 3, 4, 5, 6, and 7 individually since they have a special operation characterized by the disposition, size and shape of the parts conforming each treatment stage and which are not known in the state of the art and which may be implemented for the operation of alternative designs by providing them additional advantages.

The following examples provide the necessary elements to star operating a STAR and to build a PTAR according to that stated in the invention. It also provides the necessary elements for its assessment and development in the different stages. This examples are illustrative and not limitative of the scope of the invention.

EXAMPLES

**Example** 1: **Theoretical** assessment of the pretreatment.

Shown below is Table E, with the main parameters to be assessed in the desanding channels with the purpose of looking for the existent differences between the 2 operation regimes considered: the medium flow rate and the minimum flow rate and the recommended values in the literature (Crites and Tchbanoglous, 2000) (Reynolds and Richards, 1996. Metcalf and Eddy, Inc., 2003).

In the elaboration of Table E showing the results obtained in the assessment of the desanders at 3 different conditions of design flow, the dimensions of a single channel of the pretreatment system were considered corresponding to the 2nd stage of the PTAR of the invention.

With the dimensions of the proportional weir, the proportionality constant for the weir was calculated (k) (equation 1) from which the height value over the weir was obtained to which the design flow satisfies (equation 2). From the dimensions of the area of a channel and the design flows the sedimentation rate was calculated (equation 3) for each condition, same used later to calculate the hydraulic residence time (equation 4) and subsequently the horizontal flow rate (equation 5) (See equations in Table A, and results in Table B).

| Table A: Summary of the formulas used in the assessment | | | | |
|---|---|---|---|---|
| Eq. No. | Equation | Units | Letter | Description |
| 1 | $K=x*2*\sqrt{y}$ | $m^2$ | k | Proportionality constant ($m^2$) |
| | | | x | Horizontal distance between the weir center and the throat end (m) |
| | | | y | Vertical distance between the start and the end of the weir throat (m) |
| 2 | $H=Q/C*k$ | m | h | Water height at the weir throat |
| | | | C | Constant (4.32 s$^{-1}$) |
| | | | Q | Volume flow rate ($m^3$/s) |
| 3 | $Vs= Q/W*L$ | m/s | W | Channel width (m) |
| | | | L | Channel length (L) |
| | | | Vs | Sedimentation rate (m/s) |
| 4 | $TRH=H/Vs$ | S | TRH | Hydraulic retention time (s) |
| | | | H | Water height in a channel (m) |
| 5 | $Vh = L/TRH$ | m/s | Vh | Horizontal rate (m/s) |

| Table B. Comparison of the parameters of the desander channels at different design volume flow rate | | | |
|---|---|---|---|
| Baser of the design | Medium Q | Minimum Q | Recommended |
| Volume flow rate of the design Q ($m^3$/d) | 480 | 475 | N/A |

(continued)

| Table B. Comparison of the parameters of the desander channels at different design volume flow rate | | | |
|---|---|---|---|
| Baser of the design | Medium Q | Minimum Q | Recommended |
| Weir throat height, h1 (cm) | 6.1 | 6.0 | N/A |
| Sedimentation rate Vs (m/s) | 0.0031 | 0.0030 | 0.016-0.0216 (0.21 mm) 0.01-0.015 (0.15 mm) |
| Hydraulic residence time TRH (s) | 36.24 | 36.40 | 45-90 |
| Passing through rate or horizontal Vh (m/s) | 0.126 | 0.125 | 0.25-0.40 |

With the values used to design the PTAR, a sedimentation rate is obtained below the lower limit of the recommended ranges by the literature to sediment solids from 0.15 to 0.21 mm particle diameter having a specific weight of 2.65 g/ml.

The sedimentation rate has a direct relationship with the properties of the particle to sediment. In this sense, the low sedimentation rate indicates that the desander is designed to sediment small size and/or specific weight particles. Using the graphics shown by (Ramalho, 2003) wherein the sedimentation rate (cm/s) is related to the particle diameters at different specific weights, the theoretical particle diameter can be obtained at that sedimentation rate and an assumed specific weight (2.65g/ml, commonly used) at a given temperature (20°C).

The parameter defining the ideal time the fluid remains in a deposit it the hydraulic residence time, whose values are also below those recommended. In the calculation algorithm used the TRH is a reverse function of the sedimentation rate and direct to the water depth, then if the sedimentation rate was higher, to be at the reference values, the TRH would be lower thus needing to modify the water depth to satisfy both conditions.

Since the water height in the channel depends on the flow and since this value remains constant for the design, the implementation of an improvement would be made in the proportional weir throat dimensions, as this is which indicates the water height at the outlet wherein the design flow is achieved.

Summarizing, the desander channel is susceptible of improvements, particularly in the proportional weir and its dimensions which would be less in order to sediment smaller particles. In this sense, although non-desirable is not obligatory, as the channel has good particle removal, which probably with a more intensive maintenance, it does not cause any problem.

**Example 2. Theoretical assessment of biodigesters.**

The most important design and operation parameter in assessing the septic tanks is the hydraulic retention time, and in that sense mathematical models have been developed to predict the TSS and BOD removal efficiency in terms of hydraulic retention time (THR). In this assessment, the model proposes in (Metcalf and Eddy, Inc., 2003) is used, whose equation and constants are shown below in Table C.

| Table C. Equation for the theoretical calculation of TSS and BOD removal efficiencies as a function of TRH | | | | | |
|---|---|---|---|---|---|
| Equation | Units | Letter | Description | | |
| E = TRH / (a + b*TRH) | $m^2$ | E | Removal efficiency (%) | | |
| | | TRH | Hydraulic retention time (d) | | |
| | | a,b | Empiric constants | | BOD | TSS |
| | | | | a | 0.018 | 0.0075 |
| | | | | b | 0.02 | 0.014 |

By using this mathematical model, the 3 design flows were assessed obtaining the results shown in Table D, corresponding to: 1 to a minimum volume flow rate; 2 to a medium volume flow rate.

| Table D. TSS and BOD theoretical removal efficiencies in biodigesters | | | | |
|---|---|---|---|---|
| Design bases | 1 | | 2 | |
| Total useful volume (m3) | 582.798 | | | |
| Design Q (m3/d) | 480 | | 240.19 | |
| TRH (days) | 1.21 | | 2.42 | |
| Volume useful per zone (m3) | Zone 1 | Zone 2 | Zone 1 | Zone 2 |
| | 345.47 | 237.33 | 345.47 | 237.33 |
| TRH per zone (days) | 0.72 | 0.49 | 1.43 | 0.98 |
| BOD efficiency per zone (%) | 22.2 | 17.7 | 22.3 | 17.8 |
| TSS efficiency per zone (%) | 40.9 | 34.3 | 41.1 | 34.5 |
| Affluent BOD per zone (mg/l) | 300 | 233.35 | 300 | 232.98 |
| Effluent BOD per zone (mg/l) | 233.35 | 191.98 | 232.98 | 191.71 |
| Affluent TSS per zone (mg/l) | 300 | 177.15 | 300 | 176.64 |
| Effluent TSS per zone (mg/l) | 177.15 | 116.42 | 176.64 | 116.11 |
| Total BOD efficiency (%) | 36 | | 36 | |
| Total TSS efficiency (%) | 61 | | 61 | |

In Table D the biodigester volumes were divided per zones considering zone 1 as the total volume of the first chambers having two hoppered biodigester zones, and zone 2 as the total volume of the second chambers having one hoppered zone.

For the TRH calculations, it is indifferent to separate the digester volumes, however, for the removal efficiency calculations is relevant, since the wastewater is first processed in zone 1, and with a determined removal efficiency by the TRH in this zone, in order to further provide a removal efficiency corresponding to the TRH of zone 2.

**Example 3: Performance assessment of the up-flow anaerobic filter.**

The performance of a fix-bed anaerobic reactor, in this case referred to as UAF, is carried out by verifying the diameter/depth ratio (d/Z), the up-flow rate (VL) and the BOD theoretical removal efficiency (Montalvo M. and Guerrero S., 2003). Table E has the diameter-depth ratio.

| Table E. Diameter-depth ratio in UAF | | |
|---|---|---|
| Parameter | Value in PTAR | Recommended value |
| Stone diameter (cm) | 18 | N/A |
| Filtering media depth (m) | 1.5 | N/A |
| d/H ratio (m/m) | 0:12 | 0.5:2.0 |

The value found at the UAF for the diameter-depth ratio is low with respect to the recommended range (Montalvo M. and Guerrero S., 2003). This value indicates that if it was not a low solid affluent, the possibility of clogging would increase.

Several studies have shown that the surface plays a less important role compared to the interstices volume, where the active biomass will be suspended which degrade the organic matter, this is the reason why it is recommended to have a d/Z ratio ensuring the suitable spaces among stones, in this case, also prevent hydraulic short-circuits.

Other determinant parameter in these systems is the up-flow rate in this case being 0.10 m/h for the design flows 1; and 0.12 m/h for the design flow 2. The maximum recommended value (Montalvo M. and Guerrero S., 2003) for the up-flow rate is 0.2 m/h, then the up-flow rate at the UAF properly satisfies the criteria. The flow rate determines the hydraulic conditions within the reactor, if it were too high, it would cause the detachment and washing of the biomass even over the retention effect by the filtering media.

On the other hand, if the up-flow rate was too low, it would imply to have a very high volume of the reactor to achieve it. Further, consequently and with time, due to the deposition of death biomass at the reactor interstices, the low rate would not be capable of carrying the wastewater through these zones, causing the preferred passage through less troubled zones, significantly diminish the removal efficiency of the UAF.

Finally, by using the equation in Table F, the BOD5 removal efficiencies for the UAF were obtained, using the BOD5 values obtained from the theoretical efficiencies in the biodigesters. The useful volume for this calculation is shown in Table C, and it was obtained considering that by using stone as the packing material, a death volume of 60% is present (Metcalf and Eddy, Inc., 2003).

| Table F. Equation for the obtainment of the BOD5 theoretical removal efficiency | |
|---|---|
| Equation | Units |
| $E = 100 \cdot \left(1 - S_k \left(\frac{S_0}{B_v}\right)^m\right)$ | % |
| Letter | Description |
| E | Removal efficiency (%) |
| Sk | Empiric constant (d-1); 1.041 for VSB |
| S0 | Affluent BOD5 (mg/L) |
| Bv | Volumetric organic load (Kg BOD5/m3 d) |
| m | Empiric constant, 0.4 for VSB |

Theoretical efficiencies found in this treatment are low with respect to those reported as expected by various authors (Montalvo M. and Guerrero S., 2003) (Metcalf and Eddy, Inc., 2003), which are between 20 and up to 90%. A gross analysis of the situation indicated that the applied organic load is low, and since the anaerobic treatment operates better at high loads, this result is expected, then with the end of improving this condition and knowing that the organic load is a function of the reactor volume, it could be reduced.

At a first sight it seems illogical to reduce the volume at the UAF in order to improve its efficiency, however, is to be pointed out that this implies having a higher amount of available contaminants for less amount of biomass, which would more effectively degrade the organic matter.

| Table G. BOD theoretical removal efficiencies in the UAF | | | |
|---|---|---|---|
| Design bases | 1 | 2 | 3 |
| Total useful volume, Vu (m3) | 277.472 | | |
| Volume flow rate, Q (m3/d) | 480 | 538.9 | 457.3 |
| Affluent BOD5 | 191.98 | 195.01 | 191.71 |
| Organic load, Bv (Kg BOD5/m3 d) | 0.33 | 0.38 | 0.33 |
| Constant, Sk (d-1) | 1 | | |
| Removal efficiency of BOD5, E (%) | 19.69 | 23.32 | 19.37 |
| Affluent BOD5 | 154.18 | 149.54 | 154.58 |

As discussed in this section, the UAF is over-dimensioned for the contaminant organic load to be received, then is very convenient the fact that, if the flow increases, the UAF efficiencies will improve. Generally, over-dimensioning never has good results, in this case, it may result favorable for the UAF.

**Example 4. Assessment of the theoretical BOD removal efficiencies in the wetlands.**

Independently of the flow analysis carried out, now is shown the theoretical BOD removal efficiencies (also referred to as BOD5 by the methodology used) in the wetlands with the assumption that they are equally fed.

| Table H. BOD removal efficiency in the wetland area | | |
|---|---|---|
| Parameter | Value | |
| Empiric constant, Kt | 1.041 | |
| Width per module, W (m) | 24 | |
| Length per module, L (m) | 9 | |
| Liquid depth, H (m) | 0.6 | |
| Number of modules | 6 | |
| Total submerged volume, Vt m3 | 777.6 | |
| Humid useful volume, Vth (m3) | 311.04 | |
| Volume flow rate, Q (m3/d) | 48 | 240.19 |
| Hydraulic residence time, TRH (d) | 0.65 | 0.65 |
| Removal efficiency, E (%) | 51 | 51 |
| Affluent BOD5 (mg/L) | 154.18 | 154.58 |
| BOD effluent (mg/L) | 75.65 | 76.36 |

Table H shows that if the volume flow rate was equally divided in the 6 wetlands, this would fulfill, for the BOD5 case, with the standard NOM-01-SEMARNAT-1996, for discharges in rivers with urban public use, agricultural irrigation, natural artificial impounding, and recreation in costal water.

**Example** 5. Design of a PTAR based on the STAR described considering a population of 5 thousand inhabitants.

This PTAR was designed with the data of a population range shown in Table I, considering 80% of the drainage system coverage, and further that the 80% of the drinking water consumed arrives at the PTAR as wastewater. Contaminant concentrations were not determined through a water characterization, the values used are shown in Table I.

| Table I. Design bases used in field | |
|---|---|
| Parameter | Value |
| Total population considered for the design (inhabitants) | 5,000 |
| Population considering drainage system coverage (inhabitants) | 4,000 |
| Drinking water provision (L/inhab/day) | 150.0 |
| Wastewater provision (L/inhab/day) | 120.0 |
| Design volume flow (m3/day) | 480.0 |
| Mass flow rate (Kg BOD/day) | 144.0 |
| BOD mg/L | 300 |
| TSS mg/L | 300 |

The effluent water from the PTAR shall always have such a quality that, at the end of the treatment, fulfills the following maximum contaminant levels in month and daily average, established in the standard NOM-01-SEMARNAT-1996, whose parameters are shown in table J.

| Table J. Target quality of the PTAR effluent | | | |
|---|---|---|---|
| Contaminant | Unit | Monthly average | Daily average |
| Biochemical Oxygen Demand | mg/L | 75 | 150 |
| Total suspended solids TSS | mg/L | 75 | 125 |
| Fats and oils | mg/L | 15 | 25 |

(continued)

| Table J. Target quality of the PTAR effluent | | | |
|---|---|---|---|
| Contaminant | Unit | Monthly average | Daily average |
| Total Nitrogen | mg/L | 40 | 60 |

The relevant dimensions of the main structures contained in a PTAR build for the determined population (4 thousand inhabitants) in this example are described in Table K.

| Table K. Inner dimensions of the treatment plant elements | | | | | | | | |
|---|---|---|---|---|---|---|---|---|
| Structure | Units | Depth (m) | Area$^2$ (m$^2$) | Liquid level (m) | Useful voumen$^3$ per unit | Useful volume$^3$ per structure (m$^3$) | Total volume$^4$ per unit (m$^3$) | Total treatment volume (m$^3$) |
| Pretreatment channel[1] | 1 | From 0.4 to 0.55 | 4.91 | From 0.01 to 0.11 | NA | NA | 2.51 | 2.51 |
| Pretreatment collecting box | 1 | 0.60 | 1.44 | NA | NA | NA | 0.87 | 0.87 |
| Biodigesters distribution boxes | 2 | 0.40 | 0.20 | 0.25 | 0.05 | 0.10 | 0.08 | 0.16 |
| Biodigesters[5] | 2 | 3.70 | 100.00 | 3.40 | 291.40 | 582.80 | 326.40 | 652.80 |
| UAF intake concentration box | 1 | 2.00 | 2.56 | 0.90 | 2.30 | 2.30 | 5.12 | 5.12 |
| Up-flow Anaerobic filter[6] | 1 | 2.70 | 191.36 | 2.45 | 271.58 | 271.58 | 319.42 | 319.42 |
| General wetland feed line recording | 3 | 1.10 | 0.64 | 1.05 | 0.67 | 2.01 | 0.70 | 2.10 |
| Constructed wetlands intake distribution box | 4 | 0.50 | 0.64 | 0.45 | 0.29 | 1.16 | 0.32 | 1.28 |
| Constructed wetlands[7] | 6 | 0.80 | 288.0 | 0.60 | 201.60 | 1209.60 | 201.60 | 1209.60 |
| Wetland outlet boxes | 4 | 0.95 | 1.44 | From 0.10 to 0.75 | From 0.15 to 1.08 | From 0.60 to 4.32 | 1.37 | 5.48 |
| Chlorine contact channel | 1 | 1.80 | 10.55 | 1.25 | 13.19 | 13.19 | 18.90 | 18.90 |

NA: Not available, indicates that in the plots there are not the necessary data for the calculations.
[1]Including desander channels, the depth of the treatment is given in ranges because the desander channels are deeper than the channel having grits.
[2]Calculated area does not include the walls thick, it only includes the necessary surface to calculate the volumes.
[3]The useful volume is the maximum the water occupies while remains in the deposit, in normal operation conditions.
[4]Total volume is the maximum volume of the deposit.
[5]For the volume calculations, the hoppered zones volumes were substracted.
[6]For the volume calculations, all internal elements of the UAF were substracted, including the death volume of the filtering media.
[7]The indicated useful volume corresponds to the tank volume without the filtering media.

Typically, during a PTAR design it is recommended to consider the population increase rate and to estimate that the increasing percentage is directly proportional to the increase percentage of the drinking water provision. Also, estimate an increase in the drainage coverage based on the statistical analysis for the population. Considering a security zone in case the estimations result unreal, as they are multifactorial events, an increase percentage can be accepted.

Considering the case wherein 10% of the population having drainage do not use it, for the lack of available drinkable water, for a population of approximately 4 thousand inhabitants, we may have Table L showing an affluent flow to the PTAR slightly lower than that used for the design. The above is due to the concentration of a bigger population number in the design compensates the increase in the drinkable water provision value per inhabitant, then conciliating both values.

| Table L: Design bases considering drainage system coverage equal to drinkable water coverage | |
| --- | --- |
| Parameter | Value |
| Total estimated population in 2009 (inhabitants) | 4,076 |
| Population considering drainage coverage (inhabitants) | 3,236 |
| Drinkable water provision (L/inhab/day) (CAN, 2007) | 185.0 |
| Contribution to wastewater (L/inhab/day) | 146.9 |
| Design volume flow rate (m3/day) | 475.3 |
| Mass flow rate (Kg BOD/day) | 142.6 |
| BOD mg/L | 300 |
| TSS, mg/L | 300 |

During the establishment process for the design bases of a municipal PTAR, the most updated values have always to be considered about population, consume/provision of water and contribution to drainage, besides considering the demographic factors in population growth and to carry out the water characterization. Without the above, there is a risk of sub- or over- dimensioning the PTAR. The advantage with the STAR of the invention is the easiness of growing to increase its capacity and/or to improve the effluent quality.

In view of the difficulties encountered to carry out a characterization of waste eater in certain regions in countries with limited development, general values taken from the literature such as Metcalf and Eddy, Inc., 2003 or Crites and Tchobanoglous, 2000, which have even developed population-dependent generation factors of contaminant loads for some regions worldwide.

**REFERENCES**

- CONAGUA (2007) Manual de Agua Potable, Alcantarillado y Saneamiento. México, Distrito Federal: SEMARNAT.
- CONAGUA. (2008). Sistema Nacional de Información del Agua. Recuperado en Noviembre de 2009, de http://www.conagua.gob.mx/CONAGUA07/Noticias/TM_Cobert uras.xls
- CONAGUA. (2010). Estadísticas del Agua en México, edición 2010. México, Distrito Federal: SEMARNAT.
- Crites, R., and Tchobanoglous, G. (2000). Tratamiento de aguas residuales en pequeñas poblaciones.
- Fox, R.W., y McDonald, A.T. (1986). Introducción a la mecánica de fluidos, México: Nueva Editorial Interamericana.
- Gallego D., Montoya, J. y Valverde J. (2007). Funcionamiento hidráulico de un filtro anaerobio de flujo ascendente. Evaluación de la inundación. Universidad Nacional de Colombia Ingeniería Química. No. 450. • INEGI (2005). Sistema Nacional de Información y Estadística y Geográfica. Inventario nacional de plantas municipales de potabilización tratamiento de aguas residuales en operación. Diciembre 2011. http://www.inegi.org.mx/inegi/default.aspx?s=est&c=2344&e=&i
- Kolb, W. 1998. Qualität und Quantität von Zisternenwasser bei Gründächem. Dach + Grün 2/1998, S. 4-6.
- Lee, C.C. and Dar Lin, S. (1999). Handbook of environmental engineering calculations. USA: McGraw-Hill.
- Malina, J., and Pohland, F. (1992). Design of Anaerobic Processes for the treatment of Industrial and Municipal Wastes. New York: Technomic.
- Metclaf and Eddy, INc. (2003). Wastewater Engineering. Treatment and reuse. New York: McGraw-Hill.
- Montalvo M., S., and Guerrero S., L. (2003). Tratamiento anaerobio de residuos. Valparaíso, Chile: Universidad Técnica Federico Santa María.

- NOM-001-SEMARNAT-1996. Límites máximos permisibles de contaminantes en las descargas de aguas residuales y bienes nacionales. D.O.F.
- Ramalho, R.S. (2003). Tratamiento de aguas residuales. Quebec, Canada: Ed. Reverté, S.A.
- Raynolds, T.D. and Richards, P.A. (1996). Unit operations and processes in environmental engineering. Boston, USA: International Thomson Publishing.
- Ríos, C., Gutiérrez, L. and Aizaki, M. (2007). A case of study on the use of constructed wetlands for treatment of wastewater as an alternative for petroleum industry. Revista de la Facultad de Ciencias Básicas, Universidad de Pamplona, 25-41.
- Rojas J.A. Lagunas de estabilización de aguas residuales (2005) Bogotá Escuela Colombiana de Ingeniería p 300. Santafé de Bogotá, Colombia: McGraw-Hill Interamericana, S.A.
- Sasse, L. (1998) DEWATS. Decentralised Wastewater Treatment in Developing Countries. Bremen: Bremen Overseas Research and Development Association. ED. Borda.
- Seablom and Hanson (2004) Constructed wetlands: A critical Review of Wetland Treatment Processes. University Curriculum Development for Decentralized Wastewater Management.
- Stearman GK, George DB, Carlson Kand Lansford S (2003) Pesticide Removal from container nursery runoff in constructed wetland cells. J. Environ. Qual. 32 (4) 1584-1556.
- USEPA. (2000). Constructed Wetlands Treatment of Municipal Wastewaters. Cincinnati, Ohio: National Risk Management Research Laboratory.
- Winkler M.A., (1998), Tratamiento biológico de aguas de desecho, Ed. Limusa, México.

**Claims**

1. A system for the treatment of wastewater or STAR, comprising the following 7 stages in series:

    Stage 1) collection and passing through an intake volume regulator box having a discharge outlet.
    Stage 2) A pretreatment consisting of solid separation screens and desander channels.
    Stage 3) A first secondary treatment or anaerobic biological comprised of at least one biodigester system.
    Stage 4) Channeling to drying beds to remove sludge generated in the anaerobic biological treatments.
    Stage 5) A second biological treatment of anaerobic nature consisting in the passage through at least one UAF system, and the sludge return to the drying bed of stage 4.
    Stage 6) A third biological treatment of aerobic nature consisting of the passage through at least one reservoir constituted as constructed wetland.
    Stage 7) A tertiary treatment consisting of its passage through a disinfection unit by chlorine contact or in a UV light process.

2. The STAR according to claim 1, wherein in stage 1, the constant flow is achieved when passing through a regulator box (8), intake pipe (9), discharge pipe actuated in case of a volume excess (10), guide frame (11), manually operated outlet regulator gate (12), discharge pipe from the regulating box (13).

3. The STAR according to claim 1 or 2, wherein in stage 2 the flow passes through an inlet pipe coming from the regulator box (13), then through a 30 cm channel (14) having two grits, one of a thick mesh (15) made of 1½ in wide and 3/8 width strip bars, with an spacing between bars of 4.86 cm; and a thin mesh grit (16) made of 1 in wide and 3/8 width strip bars, with an spacing between bars of 2.54 cm, it continues through one of two desander channels (19) whose access is limited by a manually operated gate (18) and a sutro-type weir (20) in order to facilitate the sedimentation and to maintain a constant and controlled flow rate of 0.30 m/sec remaining homogeneous during the whole process.

4. The STAR according to claim 1, 2, or 3, wherein stage 2 also requires a pumping system used in case of having no-height minimum difference (with respect the tube grade line) of 1.50 m of the inlet pipe with the pretreatment and consisting of: a pump sump and suction piping of the pumping equipment (21), pump system (22), check and non-rising stem valves (23); discharge to rate regulator box at the upper part of the biodigester (24), the connection continues towards a rate regulator box (24b).

5. The STAR according to claim 1, 2, 3 or 4, wherein in stage 3 the pre-treated water flow crosses an anaerobic biodigester comprising:

    An inlet box (24c) when there is not a pumping system, intake pipe (25), subdivision forming 2 compartments (26, 27), and the first (26) has in turn two hoppered zones (28, 29), connected by a series of communicating pipes (30) at 1.50 m height (31) with the subsequent secondary treatment (27) having a hoppered zone (32) having a discharge pipe (33) in communication with the fifth stage; in each hopper a sludge discharge pipe (37) which continues through a valve box to remove these solids in each hopper (38), above each hoppered zone there is a hopper-maintenance lid (34, 35, 36), a piping system to collect biogas in each compartment (40) and biogas concentration boxes wherein it is passed through a zeolite box scavenging methane and carbon dioxide (41), and where the biodigester is comprised by a total of 6 chambers; wherein the process of sedimentation and sludge formation is carried out, minimizing the solid dragging at the bottom, allowing a water flow at constant rate remaining more time near the hoppered zones, the inlet pipes height (25) and communicating (30) is important so the water flow is suitable to favor the sedimentation and biodigestion in the hoppered zones, favoring the sedimentation and anaerobic digestion process.

6. The STAR according to claim 1, 2, 3, 4, or 5, wherein in stage 4 the removal is carried out of the sludge formed in both the previous stage 3 and the subsequent stage 5, it is comprised by two drying beds, one adjacent to stage 3 and another contiguous to stage 5 having a level difference to each other, and comprising: two deposits made of concrete material with a perimeter wall of 1.5 m height, it is incorporated to an inlet PVC pipe (52) of the sludge being generated at the biodigester hoppers or the UAF, gate (52b), distributor channel (52c), dissipating slab (52d), a bottom of clay mixed with lime in order to avoid leakages to the underground (53), perforated tube to collect the lixiviates (54), coarse gravel layer (55), medium gravel layer (56), sand layer (57), collecting pipe outlet (58) sump for the lixiviate concentration (59), and wherein the build-up sludge from stages 3 and 5 are removed after 6 months of operation of the system by hydraulic charge through the non-rising stem valves (38) located at a part of each hopper without requiring pumping.

7. The STAR according to claim 1, 2, 3, 4, 5, or 6, wherein in stage 5 the anaerobic biological treatment is carried out, consisting of an up-flow anaerobic filtering system or UAF, which is a concrete tank **characterized by** having a gravity hydraulic arrangement, avoiding the use of pumps, taking advantage of the land slope, and because it is comprised by the following elements:

a) Valve box for sludge discharge (42), an intake box wherein the water enters and then passes through two secondary semi-circular distribution boxes located over de upper slab (43), these boxes uniformly distribute the water towards the reactor bottom and provide a better control and natural cleaning, the water channeling is made through a PVC piping (44).
b) From the secondary distribution box, the water is directed to the bottom (45), which separates 40 cm the lower slab from the filtering media, and the flow moves upwards the filtering media bed by difference of pressure, the filtering media or packing are rounded river stones or volcanic rock exclusively of 4 to 6 inches diameters (45b), occupying uniformly the UAF volume up to a height of 25 cm before the collecting chutes;
c) Gases generated at the distribution boxes are removed by means of wasters (51), the zones of the side collecting channels (46), central collecting channel (47), concentrating channel and collector abutted at the front (48).
d) At the UAF upper part there are three collecting channels, two at the larger part ends of the reactor (46) and one at the center (47), each has a depth of 15 cm and has straight over-dimensioned walls carrying the treated water to a fourth general collecting channel located at an edge of the UAF (48) front channel treated water discharge (49), which is directed to the concentrating/distributing box (49b) and then to the sixth stage; lids for maintenance and checking for the side channels (50), biogas discharge and venting in order to avoid the damaging of the UAF slab (51).

8. The STAR of claim 1, 2, 3, 4, 5, 6, or 7, wherein stage 6 comprises an aerobic biological treatment consisting of a system of at least a subsurface constructed wetland, where from two wetlands, these are connected with a length-wide ratio from 1:2 to 2:2 and are **characterized by** being delimited concrete reservoirs (61), covered from the bottom and up to the outer upper walls by an impermeable geo-membrane (78) thermally sealed and fixed to the walls with aluminum strip (79) thereby preventing the leakage to the underground, they are fed with the flow coming from the UAF through the concentration/distribution box (49b), and where each one of these reservoirs also comprises:

a) intake pipe (63) and wetland inlet pipe (63b), bidirectional wetland inlet pipe in order to achieve a uniform flow of the water under treatment (64), connecting pipe (65) and bidirectional pipe (66) at each part, these three pipes 64, 65 and 66 are flow distributors and allow these to be made as a piston-type homogeneous flow,
b) one or more independent pipes operating as air injectors in order to increase the volume of oxygen in the wetlands when the organic loads are high, with solar-powered equipment (67).

c) a gravel strata at the wetland base is formed with a 0.70 to 0.75 cm height, forming a rounded coarse river gravel zone or volcanic rock of 4 to 5" (68), and a rounded river gravel zone or volcanic rock of 2 to 3" (69),

d) plant material is placed over this strata, tule-type plants (70), water level (71), 10 cm of 1" rounded river gravel layer in order to avoid the heating of the wetland water and to avoid bad odors (72),

e) a perforated tube to collect the effluent and running lengthwise (73), this pipe projects (73b) towards the collecting box (74) and determines the water level in the wetlands, at the lower part and before the elbow special PVC pieces are placed to allow the pipe rotatable movement (73b) thus promoting the plant rhizome growing (70), treated water collecting pipe and it is used as discharge to the chlorine contact box (75), at the same collecting pipe (73) other system to inject pressured air is to be connected, to thereby remove the sludge build-up causing a non-suitable flow; petrous material or volcanic rock (77).

9. The STAR according to claim 8, wherein the tule-type plant is from the typha domingenisis Pers or *Typha latifolia* species belonging to the *Pragmatis typha* family, which through it roots, transmits atmospheric oxygen inside the wetland, thereby generating aerobic areas allowing the BOD, TSS, phosphorous and ammonia sulfur reductions.

10. The STAR of the invention according to claim 8 or 9, wherein the wetland system comprises one or more reservoirs connected in parallel having a length-width ratio from 1.2 to 2:2.

11. The STAR of the invention according to claim 8, 9 or 10, wherein the wetland system may have an additional aeration system consisting of 1 inch diameter PVC horizontal piping, perforated from the middle and downwards in order to avoid the solids to clog it, and connected to a pump operating with solar-cells, these will be additional lines at the wetland outlet, which may have a fixture to inject air and to decrease solid build-up.

12. The STAR according to claim 1, 2, 3, 4, 5, 6, 7, 8, 9, 10 or 11, wherein stage 7 comprises a tertiary treatment consisting of a chlorine contact box, which is a concrete reservoir comprising: an intake pipe coming from the wetlands (80), calcium hypochlorite solution storing tank (81), chlorine inlet pipe (82), segments (83) delimited by walls communicated in zigzag (84) treated water discharge pipe (85), a disinfection system with UV light could be used.

13. The STAR according to claim 1, 2, 3, 4, 5, 6, 7, 8, 9, 10, 11, 12 or 13, wherein at least one or more biodigestion systems are included in stage 3.

14. The STAR according to claims 1, 2, 3, 4, 5, 6, 7, 8, 9, 10, 11, 12, 13 or 14, which may be used for wastewater treatment in one or several houses located near or at rural or semi-urban locations.

15. A wastewater desander system comprising: an inlet pipe coming from the regulator box (13), a 30 cm channel (14) two grits, one of thick mesh (15) made of 1½ in wide and 3/8 width strip bars, with an spacing between bars of 4.86 cm; and a thin mesh grit (16) made of 1 in wide and 3/8 width strip bars, with an spacing between bars of 2.54 cm, two desander channels (19) whose access is limited by a hand operated gate (18) and a sutro-type weir (20) in order to facilitate the sedimentation and to maintain a constant and controlled flow rate of 0.30 m/sec.

16. An anaerobic biodigester comprising: An inlet box (24c) when there is not a pumping system, intake pipe (25), subdivision forming 2 compartments (26, 27), and the first (26) has in turn two hoppered zones (28, 29), connected by a series of communicating pipes (30) at 1.50 m height (31) with the subsequent secondary treatment (27) having a hoppered zone (32) having a discharge pipe (33); in each hopper a sludge discharge pipe (37), and venting (37a) which continues through a valve box to remove these solids in each hopper (38), above each hoppered zone there is a hopper-maintenance lid (34, 35, 36), a piping system to collect biogas in each compartment (40) and biogas concentration boxes wherein it is passed through a zeolite box scavenging methane and carbon dioxide (41), and where the biodigester is comprised by a total of 6 chambers.

17. An up-flow filtering system or UAF, which is a concrete tank **characterized by** having a gravity hydraulic arrangement, avoiding the use of pumps, taking advantage of the land slope, and because it is comprised by the following elements:

a) Valve box for sludge purge (42), an intake box wherein the water enters and then passes through two secondary semi-circular distribution boxes located over de upper slab (43), these boxes uniformly distribute the water towards the reactor bottom and provide a better control and natural cleaning, the water channeling is made through a PVC piping (44).

b) From the secondary distribution box, the water is directed to the bottom (45), which separates 40 cm the lower slab from the filtering media, and the flow moves upwards the filtering media bed by difference of pressure, the filtering media or packing are rounded river stones or volcanic rock exclusively from 4 to 6 inches diameters (45b), occupying uniformly the UAF volume up to a height of 25 cm before the collecting chutes;

c) Gases generated at the distribution boxes are removed by means of wasters (51), the zones of the side collecting channels (46), central collecting channel (47), concentrating channel and collector abutted at the front (48).

d) At the UAF upper part there are three collecting channels, two at the larger part ends of the reactor (46) and one at the center (47), each has a depth of 60 cm and has straight over-dimensioned walls carrying the treated water to a fourth general collecting channel located at the wide side edge of the UAF (48) front channel treated water discharge (49), which is directed to the concentrating/distributing box (49b) and then to the system outlet; lids for maintenance and checking of the side channels (50), discharge and venting of biogas in order to avoid the damaging of the UAF slab (51).

18. An aerobic biological treatment system **characterized by** comprising a system of at least one subsurface constructed wetland, where from two wetlands, these are connected with a length-wide ratio from 1:2 to 2:2 and are **characterized by** being delimited concrete reservoirs (61), covered from the bottom and up to the outer upper walls by an impermeable geo-membrane (78) thermally sealed and fixed to the walls with aluminum strip (79) tereby preventing the leakage to the underground, they are fed from the flow coming from the UAF through the concentration/distribution box (49b), and where each one of these reservoirs also comprises:

a) intake pipe (63) and wetland inlet pipe (63b), bidirectional wetland inlet pipe in order to achieve a uniform flow of the water under treatment (64), connecting pipe (65) and bidirectional pipe (66) at each side, these three pipes 64, 65 and 66 are flow distributors and allow these to be made as a piston-type homogeneous flow,

b) one independent pipe for air injection in order to increase the volume of oxygen when the organic loads are high, with solar-powered equipment (67).

c) a gravel strata at the wetland base is formed with a 0.70 to 0.75 cm height, forming a coarse gravel zone of 4 to 5" (68), and a medium gravel zone of 2 to 3" (69),

d) plant material is placed over this strata, tule-type plants (70), water level (71), 10 cm of 1" gravel in order to avoid the heating of the wetland water and to avoid bad odors (72),

e) a perforated tube to collect the effluent and running lengthwise (73), this pipe projects (73b) towards the collecting box (74) and determines the water level in the wetlands, at the lower part and before the elbow special PVC pieces are placed to allow the pipe rotatable movement (73b) thus promoting the plant rhizome growing (70), treated water collecting pipe and is used as the system outlet in the same collecting pipe (73) is to be connected to another pipe (76) to inject pressured air to thereby remove the sludge build-up causing an unsuitable flow, and petrous material (77).

# FIG. 1

Flow rate treated by STAR type in Mexico (2011)

# FIG. 1B

Percentage of STAR installed in Mexico (2011)

# FIG. 2

# FIG. 3

# FIG. 4A

# FIG. 4B

# FIG. 4C

# FIG. 5A

# FIG. 5B

FIG. 6A

FIG. 6B

FIG. 6C

FIG. 6D

FIG. 7A

FIG. 7D

FIG. 7B

FIG. 7C

# FIG. 8A

Foam build-up (surface)

Foam build-up (submerged)

Raw sewage water intake

Effluent outlet

(Sedimentation)

(Heavy particles Sediment)

Gas detaching (bubbling)

Digesting sludge

Digesting sludge

# FIG. 8B

24b

## FIG. 8C

38

## FIG. 8D

34 35 36

41

24b

# FIG. 9A

# FIG. 9B

FIG. 9C

FIG. 9D

# FIG. 10A

# FIG. 10B

# FIG. 10C

# FIG. 11A

# FIG. 11B

FIG. 11C

FIG. 11D

## FIG. 12A

## FIG. 12B

# FIG. 13

# FIG. 14

# FIG. 15

## INTERNATIONAL SEARCH REPORT

| International application No. |
|---|
| PCT/MX2014/000110 |

### A. CLASSIFICATION OF SUBJECT MATTER

*C02F3/30* (2006.01)
*C02F9/00* (2006.01)
According to International Patent Classification (IPC) or to both national classification and IPC

### B. FIELDS SEARCHED

Minimum documentation searched (classification system followed by classification symbols)
C02F

Documentation searched other than minimum documentation to the extent that such documents are included in the fields searched

Electronic data base consulted during the international search (name of data base and, where practicable, search terms used)

EPODOC, INVENES, WPI

### C. DOCUMENTS CONSIDERED TO BE RELEVANT

| Category* | Citation of document, with indication, where appropriate, of the relevant passages | Relevant to claim No. |
|---|---|---|
| A | WO 2014118416 A1 (UNIV SANTIAGO COMPOSTELA) 07/08/2014, the whole document. | 1-15 |
| A | WO 0210077 A1 (CH2M HILL) 07/02/2002, the whole the document. | 1-15 |
| A | ES 2385002 A1 (UNIV SANTIAGO COMPOSTELA) 17/07/2012, the whole document. | 1-15 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 20/01/2015 | **(21/01/2015)** |
| Name and mailing address of the ISA/ | Authorized officer |
| OFICINA ESPAÑOLA DE PATENTES Y MARCAS | I. Abad Gurumeta |
| Paseo de la Castellana, 75 - 28071 Madrid (España) | |
| Facsimile No.: 91 349 53 04 | Telephone No. 91 3495337 |

Form PCT/ISA/210 (second sheet) (July 2009)

**INTERNATIONAL SEARCH REPORT**

| International application No. |
| --- |
| PCT/MX2014/000110 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

## See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:**1-15**

**Remark on Protest**    ☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (July 2009)

**INTERNATIONAL SEARCH REPORT**

International application No.

PCT/MX2014/000110

**Box III**

The patent application does not meet the requirement in respect of unity of invention.

The present invention application relates to a wastewater treatment system (STAR) consisting of 7 successive steps (claims 1-15), but in addition up to four systems that differ from some of the constituent steps are claimed.

Consequently, the application is considered to contain 5 inventions:

Invention 1: A wastewater treatment system or STAR, which consists of the following 7 successive steps: collection with a volume regulating tank, pre-treatment, secondary treatment, channelling to drying beds, second anaerobic biological treatment, third aerobic biological treatment, and a tertiary treatment. (Claims 1-15)

Invention 2: A wastewater grit-removal system. (Claim 15)

Invention 3: An anaerobic digester. (Claim 16)

Invention 4: An upflow filter system (Claim 17)

Invention 5: An aerobic biological treatment system. (Claim 18)

The international search was carried out for the above-mentioned invention 1 (claims 1-15), since amendments to the claims are not admissible in the present stage of the international procedure.

However, the applicant can make the corresponding amendments to the claims before the International Bureau after receiving the international search report (PCT Article 19) within the time limits indicated in PCT Rule 46.

Form PCT/ISA/210 (extra sheet) (July 2009)

## INTERNATIONAL SEARCH REPORT

Information on patent family members

International application No.

PCT/MX2014/000110

| Patent document cited in the search report | Publication date | Patent family member(s) | Publication date |
|---|---|---|---|
| WO2014118416 A1 | 07.08.2014 | ES2401445 A1<br>ES2401445 B2 | 19.04.2013<br>20.01.2014 |
| WO0210077 A1 | 07.02.2002 | HK1057532 A1<br>US2003159988 A1<br>US6863818 B2<br>EP1313669 A1<br>EP1313669 A4<br>CN1449363 A<br>CN1232450C C<br>AU8076601 A<br>AU2001280766B B2<br>AT417809T T<br>US6517723 B1 | 07.04.2006<br>28.08.2003<br>08.03.2005<br>28.05.2003<br>13.07.2005<br>15.10.2003<br>21.12.2005<br>13.02.2002<br>21.07.2005<br>15.01.2009<br>11.02.2003 |
| ES2385002 A1 | 17.07.2012 | NONE | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2010073031 W
- US 5951866 A
- US 6517723 B
- MX 265382

### Non-patent literature cited in the description

- Fluid flow treated by type of STAR in Mexico. *National Inventory of Municipal Plants for Wastewater Purification Treatment in Operation,* December 2011
- Percentage of STAR installed in Mexico. *National Inventory of Municipal Plants for Wastewater Purification Treatment in Operation,* December 2011
- **REYNOLDS ; RICHARDS.** Crites and Tchbanoglous, 2000. Metcalf and Eddy, Inc, 2003
- Manual de Agua Potable, Alcantarillado y Saneamiento. 2007
- *Sistema Nacional de Información del Agua. Recuperado,* 2008, http://www.conagua.gob.mx/CONAGUA07/Noticias/TM_Coberturas.xls
- **CONAGUA.** Estadísticas del Agua en México. México, Distrito Federal: SEMARNAT, 2010
- **CRITES, R. ; TCHOBANOGLOUS, G.** *Tratamiento de aguas residuales en pequeñas poblaciones,* 2000
- **FOX, R.W. ; Y MCDONALD, A.T.** *Introducción a la mecánica de fluidos,* 1986
- **GALLEGO D. ; MONTOYA, J. ; Y VALVERDE J.** Funcionamiento hidráulico de un filtro anaerobio de flujo ascendente. Evaluación de la inundación. *Universidad Nacional de Colombia Ingeniería Química. No. 450,* 2007
- **INEGI.** Sistema Nacional de Información y Estadística y Geográfica. *Inventario nacional de plantas municipales de potabilización tratamiento de aguas residuales en operación,* December 2011, http://www.inegi.org.mx/inegi/default.aspx?s=est&c=2344&e=&i
- **KOLB, W.** Qualität und Quantität von Zisternenwasser bei Gründächem. *Dach + Grün,* February 1998, 4-6
- **LEE, C.C. ; DAR LIN, S.** Handbook of environmental engineering calculations. USA. McGraw-Hill, 1999
- **MALINA, J. ; POHLAND, F.** Design of Anaerobic Processes for the treatment of Industrial and Municipal Wastes. New York. New York: Technomic, 1992
- Treatment and reuse. **METCLAF ; EDDY ; INC.** Wastewater Engineering. Treatment and reuse. New York. McGraw-Hill, 2003
- **MONTALVO M., S. ; GUERRERO S., L.** Tratamiento anaerobio de residuos. *Valparaíso, Chile: Universidad Técnica Federico Santa María,* 2003
- **RAMALHO, R.S.** Tratamiento de aguas residuales. Quebec, Canada, 2003
- **RAYNOLDS, T.D. ; RICHARDS, P.A.** Unit operations and processes in environmental engineering. Boston, USA. International Thomson Publishing, 1996
- **RÍOS, C. ; GUTIÉRREZ, L. ; AIZAKI, M.** A case of study on the use of constructed wetlands for treatment of wastewater as an alternative for petroleum industry. *Revista de la Facultad de Ciencias Básicas, Universidad de Pamplona,* 2007, 25-41
- Lagunas de estabilización de aguas residuales (2005) Bogotá Escuela Colombiana de Ingeniería p 300. **ROJAS J.A.** Santafé de Bogotá, Colombia. McGraw-Hill Interamericana
- **SASSE, L.** DEWATS. Decentralised Wastewater Treatment in Developing Countries. Bremen: Bremen Overseas Research and Development Association, 1998
- **SEABLOM ; HANSON.** Constructed wetlands: A critical Review of Wetland Treatment Processes. University Curriculum Development for Decentralized Wastewater Management, 2004
- **STEARMAN GK ; GEORGE DB ; CARLSON KAND ; LANSFORD S.** Pesticide Removal from container nursery runoff in constructed wetland cells. *J. Environ. Qual.,* 2003, vol. 32 (4), 1584-1556
- **USEPA.** Constructed Wetlands Treatment of Municipal Wastewaters. Cincinnati, Ohio: National Risk Management Research Laboratory, 2000
- **WINKLER M.A.** Tratamiento biológico de aguas de desecho. 1998